(19) Europäisches Patentamt
European Patent Office
Office européen des brevets

(11) **EP 1 594 229 B1**

(12) **EUROPÄISCHE PATENTSCHRIFT**

(45) Veröffentlichungstag und Bekanntmachung des Hinweises auf die Patenterteilung:
**17.06.2009 Patentblatt 2009/25**

(51) Int Cl.:
**H03K 23/00** *(2006.01)* **G06F 7/72** *(2006.01)*

(21) Anmeldenummer: **05009352.5**

(22) Anmeldetag: **28.04.2005**

(54) **Verfahren und Vorrichtung zur Ermittlung der Anzahl von abgelaufenen Taktzyklen eines binären Zufallsgenerators**

Method and apparatus for determining the number of elapsed clock cycles of a binary pseudo-random generator

Procédé et appareil pour déterminer le nombre de cycles d'horloge écoulés d'un générateur binaire pseudo-aléatoire

(84) Benannte Vertragsstaaten:
**DE FR GB**

(30) Priorität: **07.05.2004 DE 102004022647**

(43) Veröffentlichungstag der Anmeldung:
**09.11.2005 Patentblatt 2005/45**

(73) Patentinhaber: **Rohde & Schwarz GmbH & Co. KG
81671 München (DE)**

(72) Erfinder: **Wanierke, Otmar
81539 München (DE)**

(74) Vertreter: **Körfer, Thomas et al
Mitscherlich & Partner
Patent- und Rechtsanwälte
Postfach 33 06 09
80066 München (DE)**

(56) Entgegenhaltungen:
- CLARK D W ET AL: "MAXIMAL AND NEAR-MAXIMAL SHIFT REGISTER SEQUENCES: EFFICIENT EVENT COUNTERS AND EASY DISCRETE LOGARITHMS" IEEE TRANSACTIONS ON COMPUTERS, IEEE INC. NEW YORK, US, Bd. 43, Nr. 5, 1. Mai 1994 (1994-05-01), Seiten 560-567, XP000442049 ISSN: 0018-9340
- MUKUND S K ET AL: "On reducing test length in LFSR based testing" FOURTH CSI/IEEE INTERNATIONAL SYMPOSIUM ON VLSI DESIGN, 1991, PROCEEDINGS, NEW DELHI, INDIA 4-8 JAN. 1991, LOS ALAMITOS, CA, USA,IEEE COMPUT. SOC, US, 4. Januar 1991 (1991-01-04), Seiten 231-236, XP010022331 ISBN: 0-8186-2125-7
- D. E. KNUTH: "THE ART OF COMPUTER PROGRAMMING; VOL. 2: SEMINUMERICAL ALGORITHMS" 1998, ADDISON-WESLEY , READING, MA, USA 310200 , XP000216857 Seiten 242-243
- J. L. MASSEY: "Logarithms in finite cyclic groups - cryptographic issues" PROCEEDINGS OF THE 4TH BENELUX SYMPOSIUM ON INFORMATION THEORY, Mai 1983 (1983-05), Seiten 17-25, XP008088626 Leuven, Belgien

EP 1 594 229 B1

**Beschreibung**

Die Erfindung betrifft ein Verfahren und eine Vorrichtung zur Ermittlung der Anzahl $\Delta\tau$ von abgelaufenen Taktzyklen eines binären Zufallsgenerators.

Eine wichtige Forderung, die an ein Datenübertragungssystem gestellt wird, ist die Unabhängigkeit seiner Eigenschaften von den zu übertragenden Daten. So können beispielsweise sich ständig wiederholende Bitfolgen oder lange Folgen von "Nullen" oder "Einsen" zu deutlichen Unterschieden im Empfangspegel, zu Problemen bei der Taktrückgewinnung und gegebenenfalls auch zu Schwierigkeiten bei einer adaptiven Entzerrung führen. Alle diese Probleme treten jedoch nicht auf, wenn die Bitfolgen pseudozufällig sind und keine erkennbaren Bitmuster vorhanden sind. Diese Forderung führt dazu, daß viele Datenübertragungssysteme einen binären Zufallsgenerator (Scrambler) enthalten, der eine binäre Zufallsfolge generiert, mit der aus jeder beliebigen Eingangsbitfolge eine pseudozufällige Ausgangsbitfolge erzeugt wird, die am Ende der Datenübertragungsstrecke mit einem inversen binären Zufallsgenerator (Descrambler) wieder in die ursprüngliche Eingangsbitfolge zurückgeführt wird.

Derartige binäre Zufallsgeneratoren werden über Schieberegister, wie z. B. in der DE 41 39 630 Al dargestellt, realisiert, bei denen zur Erzeugung einer binären Zufallsfolge am Ausgang des Schieberegisters eine oder mehrere Schieberegisterstufen an den Eingang des Schieberegisters zurückgekoppelt werden. Die binäre Zufallsfolge weist eine von der Konfiguration der Rückkopplungen des Schieberegisters abhängige Periodizität auf. Die Zykluslänge n der binären Zufallsfolge ist bei einem Schieberegister mit m Schieberegisterstufen maximal $2^m-1$ Takte lang.

Neben der Generierung einer binären Zufallsfolge kann, wie im folgenden gezeigt wird, ein binärer Zufallsgenerator auch zur Zeitüberwachung in einem Datenübertragungssystem, beispielsweise zur zeitlichen Erfassung einer Störung in einer Busstation des Datenübertragungssystems, eingesetzt werden. Derartige Aufgaben wurden bisher durch in Serie geschaltete Zähler wahrgenommen, deren Zählerstände ein Maß für die abgelaufene Zeitdauer darstellen. Nachteilig an einer derartigen Realisierung ist der hohe Hardware-Aufwand mit vielen gekoppelten Zählerbausteinen, falls der durch die gekoppelten Zähler abzudeckende Zeitüberwachungshorizont wie im Falle einer Betriebsüberwachung der Datenübertragungsstrecke vergleichsweise groß ist. Auch stellt das gleichzeitige Rücksetzen mehrerer Zähler bei Überlauf der Zählerkombination eine nicht unbedeutende Fehlerquelle dar, da ein fehlerhaftes Bit-Kippen beim gleichzeitigen Rücksetzen einer Vielzahl von Bitstellen nicht unwahrscheinlich ist.

Ein binärer Zufallsgenerator kann zur Zeitüberwachung eingesetzt werden, indem die Zustände aller Schieberegisterstufen zu Beginn und am Ende der Zeitüberwachung zur Bildung jeweils eines Zustandsvektors ausgelesen werden und mit allen möglichen Zustandsvektoren des rückgekoppelten Schieberegisters, die in einem Speicher abgelegt sind, verglichen werden. Bei Identität der beiden ausgelesenen Zustandsvektoren mit jeweils einem der abgespeicherten Vergleichszustandsvektoren werden die zu den abgespeicherten Vergleichszustandsvektoren korrespondierenden Taktzyklen, derren Differenz ein Maß für das abgelaufene Zeitintervall darstellt, ermittelt. Auf diese Weise liegt eine gegenüber der Zähler-Lösung hardwareminimierte Realisierung zur Ermittlung eines Zeitintervalls - ein rückgekoppeltes Schieberegister - vor. Auch die Wahrscheinlichkeit eines fehlerhaften Bit-Kippens ist minimiert, da nur ein Bit in den einzelnen Schieberegisterstufen verarbeitet wird.

Der binäre Zufallsgenerator ist aber in seiner Anwendung als Zeitmesser durch einen vergleichsweise hohen Aufwand beim Vergleich der ausgelesenen Zustandsvektoren mit allen abgespeicherten Vergleichszustandsvektoren gekennzeichnet. Bei höherstufigen Schieberegistern kann dieser Suchprozeß bis zu $2^m-1$ Suchschritte beinhalten, was i.a. bei Echtzeitanwendungen nicht praktikabel ist.

In Clark, D.W. et al: "Maximal and Near-Maximal Shift Register Sequences Efficient Event Counters and Easy Discrete Logarithms" in IEEE Transactions on Computers, IEEE Inc. New York, US, Band 43, Nr. 5, 1. Mai 1994, Seiten 560 - 567 und alternativ in Mukund, S.K. et al: "On reducing test length in LFSR based testing", Fourth CSI/IEEE International Symposium on VLSI design, 1991, Proceedings, New Delhi, India, 4-8 Jan. 1991, Los Alamitos, CA, US, IEEE Comput. Soc., US, 4. Januar 1991, Seiten 231 - 236 wird ein Verfahren vorgestellt, wie dieser vergleichsweise hohe Vergleichsaufwand zwischen ausgelesenen Zustandsvektoren und Zustandsvektoren reduziert werden kann. Auf der Basis des chinesischen Restklassensatzes kann die Zykluslänge n in ein Produkt von ganzzahligen Primfaktoren zerlegt werden. Für jedes dieser Primfaktoren wird der ausgelesene Zustandsvektor jeweils um einen Faktor zeitlich verschoben, der der Division der Zykluslänge n durch den jeweiligen Primfaktor entspricht, und mit dem jeweiligen Primfaktor entsprechenden Anzahl von vorab ermittelten, um ganzzahlige Vielfache dieses Faktors zeitliche verschobenen Vergleichszustandsvektoren verglichen. Für jeden Primfaktor werden der zum jeweiligen zeitlich verschobenen Zustandsvektor identische zeitlich verschobene Vergleichszustandsvektor und der zu diesem Vergleichszustandsvektor gehörige Moduluswert des gesuchten Taktzyklus durch den jeweiligen Primfaktor ermittelt. Aus allen für jeden Primfaktor auf diese Weise ermittelten Moduluswerten kann mittels der mathematischen Formel des chinesischen Restklassensatzes zur Berechnung simultaner Kongruenzen ganzer Zahle der gesuchte Taktzyklus berechnet werden.

Der Erfindung liegt die Aufgabe zugrunde, ein Verfahren und eine Vorrichtung zur Ermittlung der Anzahl von abgelaufenen Taktzyklen eines binären Zufallsgenerators zu entwickeln, das gegenüber dem Stand der Technik einen zusätzlich reduzierten Speicheraufwand aufweist.

Die Erfindung wird durch ein Verfahren zur Ermittlung der Anzahl $\Delta\tau$ von abgelaufenen Taktzyklen eines binären Zufallsgenerators nach Anspruch 1 und durch eine Vorrichtung zur Ermittlung der Anzahl $\Delta\tau$ von abgelaufenen Taktzyklen eines binären Zufallsgenerators nach Anspruch 4 gelöst.

Vorteilhafte Ausgestaltungen der Erfindung sind in den abhängigen Ansprüchen angegeben.

Fällt der Beginn des zu vermessenden Zeitintervalls mit der Initialisierung des binären Zufallsgenerators zusammen, so ist nur der Zustandsvektor am Ende des zu vermessenden Zeitintervalls auszulesen und mit den Vergleichszustandsvektoren zu vergleichen, um den zum Zustandsvektor am Ende des Zeitintervalls gehörigen Taktzyklus $\tau2$ zu ermitteln, der der Anzahl $\Delta\tau$ an abgelaufenen Taktzyklen des binären Zufallsgenerator entspricht.

Für alle teilerfremden Faktoren $p_l$ der Zykluslänge n der binären Zufallsfolge, die sich aus der Struktur der Rückkopplungen des Schieberegisters ergibt, können in einer ersten Ausführungsform des erfindungsgemäßen Verfahrens zur Ermittlung der Anzahl $\Delta\tau$ von abgelaufenen Taktzyklen eines binären Zufallsgenerators die Vergleichszustandsvektoren $a_{REF}'$ ($\tau$il) erst bei Bedarf im Rahmen der Zeitmessung über eine iterative Berechnung ermittelt werden.

Zur Reduzierung des Suchprozesses können binäre Suchalgorithmen über Entscheidungsbäume oder Hash-Algorithmen eingesetzt werden.

In der zweiten Ausführungsform des Verfahrens zur Ermittlung der Anzahl $\Delta\tau$ von abgelaufenen Taktzyklen eines binären Zufallsgenerators erfolgt eine Vorabberechnung und Speicherung lediglich einer Teilmenge der Vergleichszustandvektoren. Falls im Bedarfsfall der durchzuführenden Zeitmessung die ausgelesenen Zustandsvektoren mit den nur teilweise abgespeicherten Vergleichsvektoren nicht übereinstimmen, werden die ausgelesenen Zustandsvektoren zyklisch um die Anzahl der abgespeicherten Vergleichszustandsvektoren zeitlich verschoben und die somit zeitlich verschobenen ausgelesenen Zustandsvektoren mit den nur teilweise abgespeicherten Vergleichszustandsvektoren verglichen, bis ein zum zeitlich verschobenen ausgelesenen Zustandsvektor identischer Vergleichszustandsvektor gefunden ist. Diese Ausführungsform wird insbesondere bei betragsmäßig großen teilerfremden Faktoren $p_l$, zu denen eine Vielzahl an zu untersuchenden Vergleichszustandsvektoren gehört, angewendet, um die Anzahl an abzuspeichernden Vergleichszustandsvektoren zu reduzieren.

Die zwei Ausführungsformen des Verfahrens und der Vorrichtung zur Ermittlung der Anzahl $\Delta\tau$ von abgelaufenen Taktzyklen eines binären Zufallsgenerators werden nachfolgend unter Bezugnahme auf die Zeichnung näher erläutert. In der Zeichnung zeigen:

Fig. 1    ein Blockschaltbild einer Vorrichtung zur Ermittlung der Anzahl von abgelaufenen Taktzyklen eines binären Zufallsgenerators,

Fig. 2    ein Flußdiagram eines erfindungsgemäßen Verfahrens zur Ermittlung der Anzahl von abgelaufenen Taktzyklen eines binären Zufallsgenerators,

Fig. 2A    ein Teilflußdiagramm des Flußflußdiagramms in Fig. 2 für eine erste Ausführungsform eines erfindungsgemäßen Verfahrens zur Ermittlung der Anzahl von abgelaufenen Taktzyklen eines binären Zufallsgenerators,

Fig. 2C    ein Teilflußdiagramm des Flußflußdiagramms in Fig. 2 für eine zweite Ausführungsform eines Verfahrens zur Ermittlung der Anzahl von abgelaufenen Taktzyklen eines binären Zufallsgenerators.

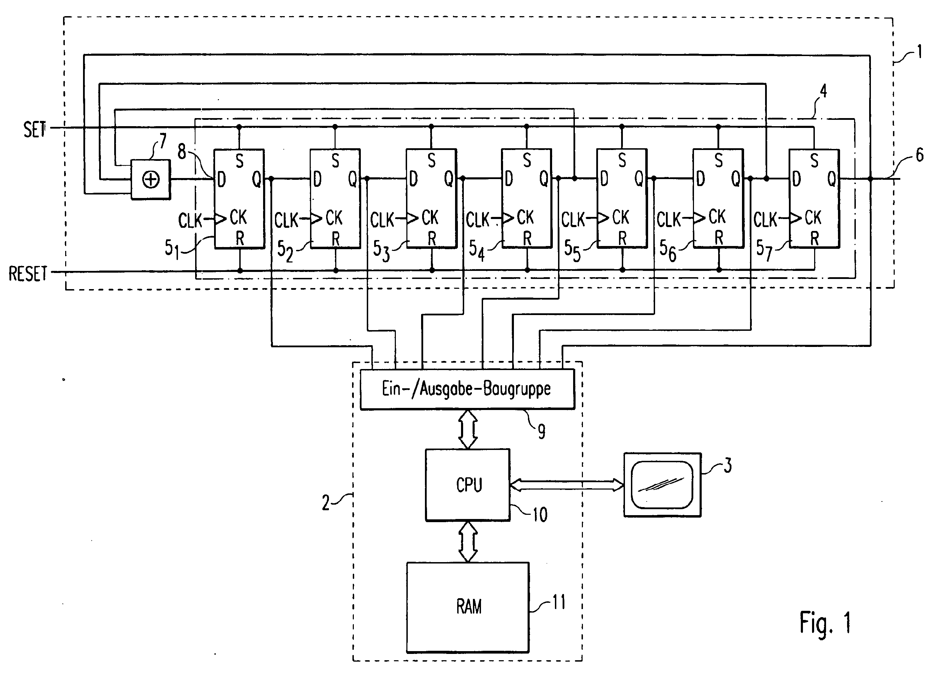

Die Vorrichtung zur Ermittlung der Anzahl $\Delta\tau$ von abgelaufenen Taktzyklen in einem binären Zufallsgenerator in Fig. 1 umfaßt einen binären Zufallsgenerator 1, eine Rechnereinheit 2 und eine Anzeige-Einrichtung 3 zur Darstellung der Ergebnisse. Der binäre Zufallsgenerator zur Erzeugung einer binären Zufallsfolge, welche eine Periodizität der Zykluslänge n aufweist, ist über ein Schieberegister 4 mit mehreren aus D-Flip-Flop-Bausteinen realisierten Schieberegisterstufen $5_1$, $5_2$, $5_3$, . . . und $5_m$, im dargestellten Beispiel in Fig. 1 den Schieberegisterstufen $5_1$, $5_2$, $5_3$, $5_4$, $5_5$, $5_6$ und $5_7$, verwirklicht. Zur Erzeugung einen pseudozufälligen Binärfolge mit einer bestimmten Zykluslänge n am Ausgang 6 des Schieberegisters 1 sind die Ausgänge von definierten Schieberegisterstufen, im dargestellten Beispiel in Fig. 1 die Ausgänge der Schieberegisterstufen $5_4$, $5_6$ und $5_7$ über einen Modulus-2-Addierer 7 an den Eingang 8 des Schieberegisters 1 rückgekoppelt.

Die Binärzustände an den Ausgängen aller Schieberegisterstufen $5_1$, $5_2$, .. und $5_m$ des Schieberegisters 1 werden am Beginn $t_1$ und am Ende $t_2$ des zu vermessenden Zeitintervalls $\Delta t$ von einer binären Ein-/Ausgabe-Baugruppe 9 der Rechnereinheit 2 eingelesen und als Zustandvektoren $a(\tau1)$ und $a(\tau2)$ einer Prozessoreinheit (CPU) 10 zur Weiterverarbeitung in Echtzeit, wie weiter unten gezeigt wird, zugeführt. Die Argumente $\tau1$ und $\tau2$ der Zustandvektoren a ($\tau$) stellen den Taktzyklus des binären Zufallsgenerators 1 zum Zeitpunkt $t_1$ (Beginn des zu vermessenden Zeitintervalls $\Delta t$) und zum Zeitpunkt $t_2$ (Ende des zu vermessenden Zeitintervalls $\Delta t$) dar. Die zum Zeitpunkt $t_1$ und $t_2$ eingelesenen Zustandsvektoren $a(\tau1)$ und $a(\tau2)$ werden im Rahmen der Weiterverarbeitung durch die Prozessoreinheit 10 mit Vergleichszustandsvektoren a'($\tau$i) verglichen, die in einem Speicherbaustein (RAM) 11 abgelegt sind. Hierbei stellt das Argument $\tau$i alle während einer Zykluslänge n der pseudozufälligen Binärfolge vorkommenden Taktzyklen dar.

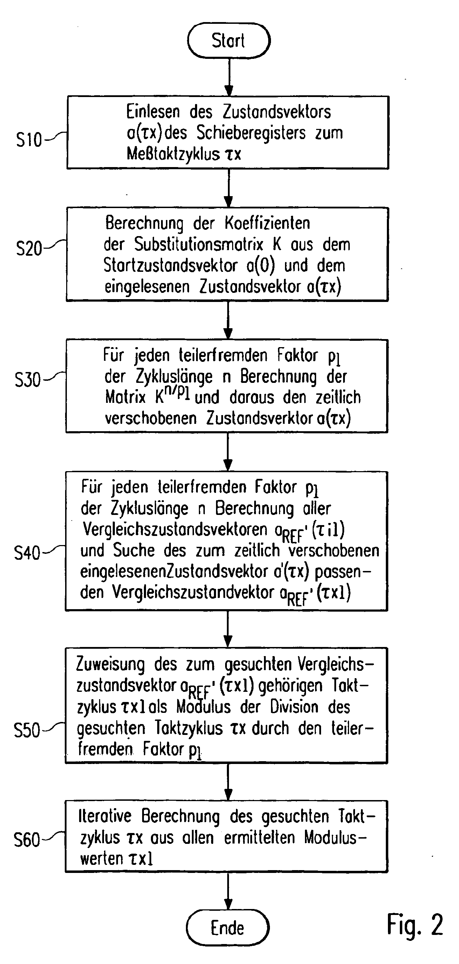

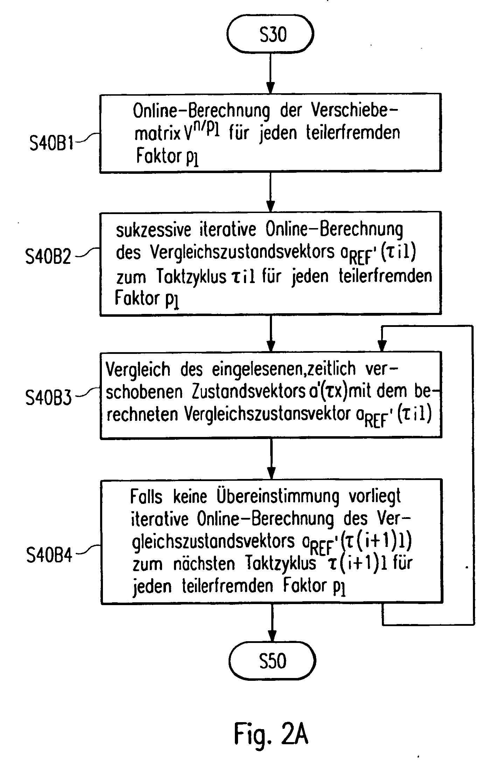

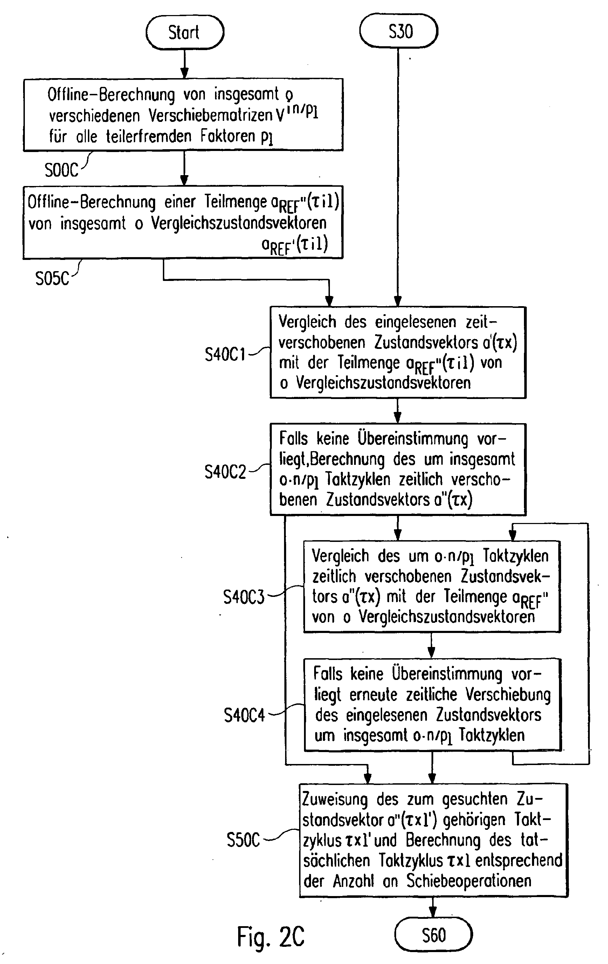

Bevor das in Fig. 2 dargestellte erfindungsgemäße Verfahren zur Ermittlung der Anzahl $\Delta\tau$ von abgelaufenen Taktzyklen eines binären Zufallsgenerators 1 weiter unter im einzelnen vorgestellt wird, werden im folgenden die für das Verständnis des erfindungsgemäßen Verfahrens erforderlichen grundlegenden mathematischen Zusammenhänge hergeleitet:

Die Binärzustande der Schieberegisterstufen $5_1$, $5_2$ bis $5_m$ des Schieberegisters 4 zum Taktzyklus $\tau_i$ werden jeweils durch die Koeffizienten $a_1(\tau i)$, $a_2(\tau i)$ bis $a_m(\tau i)$ des Zustandvektor $a(\tau_i)$ gemäß Gleichung (1) beschrieben:

$$a(\tau i) = (a_1(\tau i),\ a_2(\tau i),...,a_m(\tau i)) \tag{1}$$

Mit jeder aktiven Flanke des Taktes (Clk) - im dargestellten Beispiel der Fig. 1 mit jeder positiven Flanke des Taktes (Clk) - übernimmt jede Schieberegisterstufe $5_2$, $5_3$ bis $5_m$ mit Ausnahme der Schieberegisterstufe $5_1$ am Eingang 8 des Schieberegisters 4 an ihren Ausgang den bisherigen Binärzustand am Ausgang ihrer Vorgänger-Schieberegisterstufe $5_1$, $5_2$ bis $5_{m-1}$. Der Binärzustand $a_j(\tau(i+1))$ der j-ten Schieberegisterstufe $5_j$ des Schieberegisters 4 zum Taktzyklus $i(\tau+1)$ ergibt sich gemäß der oberen Zeile von Gleichung (2) aus dem Binärzustand $a_{j-1}(\tau i)$ ihrer Vorgänger-Schieberegisterstufe - j-1-te Schiebnregisterstufe $5_{j-1}$ - zum Taktzyklus $\tau i$.

$$a_j(\tau(i+1)) = \begin{cases} a_{j-1}(\tau i)\ f\ddot{u}r & 2 \leq j \leq m \\ g \circ a(\tau i)\ f\ddot{u}r & j = 1 \end{cases} \tag{2}$$

Die Schieberegisterstufe $5_1$ am Eingang des Schieberegisters 4 übernimmt bei aktiver Flanke des Taktes (Clk) an ihrem Ausgang die über den Modulus-2-Addierer 7 addierten bisherigen Binärzustände der Ausgänge aller rückgekoppelten Schieberegisterstufen. Welcher Ausgang einer Schieberegisterstufe $5_j$ des Schieberegisters 4 über den Modulus-2-Addierer 7 an den Eingang 8 des Schieberegisters 4 rückgekoppelt wird, wird gemäß Gleichung (3) über den zugehörigen Koeffizienten $g_j$ des Vektors g festgelegt, der im Fall einer Rückkopplung des Binärzustands des Ausgangs der j-ten Schieberegisterstufe $5_j$ den Wert "1" und im Fall einer Nichtrückkopplung Rückkopplung des Binärzustands des Ausgangs der j-ten Schieberegisterstufe $5_j$ den Wert "0" aufweist:

$$g = (g_1, g_2, ..., g_m) \tag{3}$$

Durch Bildung eines Skalarprodukts zwischen dem Vektor g und dem Zustandsvektor $a(\tau i)$ gemäß der unteren Zeile von Gleichung (2) wird die Funktion der Rückkopplung von Binärzuständen an Ausgängen bestimmter durch die Koeffizienten $g_j$ des Vektors g festgelegter Schieberegisterstufen $5_j$ und deren binäre Addition mittels Modulus-2-Addierer 7 mathematisch beschrieben.

Gemäß Gleichung (4) ergibt sich die binäre Zufallsfolge $s(\tau i)$ zu den einzelnen Taktzyklen $\tau i$ aus Binärzuständen $a_m(\tau i)$ der Schieberegisterstufe $5_m$ am Ausgang 6 des Schieberegisters 4 zu den einzelnen Taktzyklen $\tau i$.

$$s(\tau i) = a_m(\tau i) \tag{4}$$

Da der Vektor $s(\tau i)$ für eine definierte Anzahl von Taktzyklen $\tau i$ dem Zustandvektor $a(\tau i)$ entspricht, kann für das Verfahren zur Ermittlung der Anzahl $\Delta\tau$ von abgelaufenen Taktzyklen eines binären Zufallsgenerators im folgenden anstelle des parallelen Auslesens der Binärzustände $a_j(\tau i)$ an den Ausgängen aller Schieberegisterstufen $5_j$ auch der Vektor $s(\tau i)$ der binären Zufallsfolge am Ausgang 6 des Schieberegisters 4 sequentiell ausgelesen werden.

Der Zustandsvektor $a(\tau(i+1))$ des Schieberegisters 4 zu einem Taktzyklus, der genau einen Taktzyklus später als der Taktzyklus $\tau i$ liegt, kann aus Gleichung (1) unter Zuhilfenahme der Beziehungen in Gleichung (2) über eine Verschiebematrix V aus dem Zustandsvektor $a(\tau i)$ des Schieberegisters 4 zum Taktzyklus $\tau i$ entsprechend Gleichung (5) ermittelt werden.

$$a(\tau(i+1)) = V * a(\tau i) \tag{5}$$

Die Koeffizienten der Verschiebematrix V ergeben sich dabei unter Zuhilfenahme der Beziehungen in Gleichung (2) entsprechend Gleichung (6).

$$V = \begin{bmatrix} g_1 & g_2 & g_3 & \cdots & g_{m-3} & g_{m-2} & g_{m-1} & g_m \\ 1 & 0 & 0 & \cdots & 0 & 0 & 0 & 0 \\ \vdots & \vdots & \vdots & \cdots & \vdots & \vdots & \vdots & \vdots \\ 0 & 0 & 0 & \cdots & 0 & 1 & 0 & 0 \\ 0 & 0 & 0 & \cdots & 0 & 0 & 1 & 0 \end{bmatrix} \tag{6}$$

Um den Zustandsvektor $a(\tau(i+x))$ des Schieberegisters 4 zu einem Taktzyklus, der um insgesamt x Taktzyklen später als der Taktzyklus $\tau i$ liegt, zu bestimmen, wird eine x-malige Matrizenmultiplikation des Zustandsvektor $a(\tau i)$ des Schieberegisters 4 zum Taktzyklus $\tau i$ mit der Verschiebematrix V entsprechend Gleichung (7) durchgeführt.

$$a(\tau(i+x)) = V^x * a(\tau i) \tag{7}$$

Für die x-malig multiplizierte Verschiebematrix V wird gemäß Gleichung (8) die Substitutionsmatrix K mit den Spaltenvektoren $k_i$ eingeführt:

$$V^x = K = \begin{bmatrix} k_1 & k_2 & & k_i & & k_m \end{bmatrix} \tag{8}$$

Ein zum Taktzyklus $\tau i$ um insgesamt x Taktzyklen zeitlich verschobener Zustandsvektor $a(\tau(i+x))$ des Schieberegisters 4 kann aus einem Zustandsvektor $a(\tau i)$ zum Taktzyklus $\tau i$ gemäß Gleichung (9) ermittelt werden, welche aus der Kombination von Gleichung (8) mit Gleichung (7) hervorgeht:

$$a(\tau(i+x)) = K * a(\tau i) \tag{9}$$

Wird vorausgesetzt, daß aufgrund der Struktur der Rückkopplungen eines m-stufigen Schieberegisters die Zykluslänge n der durch das rückgekoppelte Schieberegister erzeugten binären Zufallsfolge gleich $2^m-1$ ist, so kann gemäß Gleichung (10) folgende Periodizitätsbedingung festgehalten werden:

$$a(\tau(i+n)) = a(\tau i) \tag{10}$$

Jede Zykluslänge n der erzeugten binären Zufallsfolge kann gemäß Gleichung (11) in ein Produkt von insgesamt u teilerfremden ganzzahligen Faktoren $p_1$ zerlegt werden, wobei alle teilerfremden Faktoren $p_1$ nur Werte größer als eins annehmen können.

$$n = \prod_{l=1}^{u} p_l \tag{11}$$

Ganz wesentlich für den Erfindungsgedanken ist die Tatsache, daß mittels Substitution des Arguments $\tau i$ durch

die Transformierte $\tau i*n/p_1$ im Zustandsvektor a ($\tau i$) gemäß Gleichung (12) ein zeitlich verschobener Zustandsvektor a' ($\tau i$) entsteht, der eine kürzere Periodizität als die Periodizität n des Zustandsvektors a($\tau i$) aufweist.

$$a'(\tau i) = a(\tau i*n/p_1) \qquad\qquad (12)$$

Nach Gleichung (13) weist der zeitlich verschobene Zustandsvektor a'($\tau i$) eine Periodizität von $p_1$, wie weiter unter gezeigt wird, auf.

$$a'(\tau i+p_1) = a'(\tau i) \qquad\qquad (13)$$

Wird der linke Term von Gleichung (13) in Gleichung (12) eingesetzt und anschließend die Periodizität n des Zustandsvektors a($\tau i$) berücksichtigt, so kann vergleichsweise trivial gemäß Gleichung (14) die Periodizität des zeitlich verschobenen Zustandsvektor a' ($\tau i$) über die Zykluslänge $p_1$ nachgewiesen werden.

$$a'(\tau i+p_1) = a((\tau i+p_1)*n/p_1) = a(\tau i*n/p_1+n) =$$
$$= a(\tau i*n/p_1) = a'(\tau i) \qquad\qquad (14)$$

Aufgrund der Periodizität des zeitlich verschobenen Zustandsvektors a'($\tau i$) über die Zykluslänge $p_1$ ist zum Taktzyklus $\tau il$, der dem Modulus bei Division des Taktzykluses $\tau i$ durch den teilerfremden Faktor $p_1$ entspricht, gemäß Gleichung (15) der zeitlich verschobene Zustandsvektor a'($\tau$) gleich groß wie zum Taktzyklus $\tau i$.

$$a'(\tau il) = a'(\tau i|p_1) = a'(\tau i) \qquad\qquad (15)$$

Da wie oben schon gezeigt alle Zustandsvektoren a($\tau i$) innerhalb einer Zykluslänge n der binären Zufallsfolge s($\tau i$) nur ein einziges mal vorkommen und die zeitlich verschobenen Zustandsvektoren a'($\tau il$) = a'($\tau i$) eine Teilmenge der Zustandsvektoren a($\tau i$) darstellen, kommen letztere auch nur ein einziges mal innrhalb der Zykluslänge n vor. Berücksichtigt man zusätzlich, daß jeder zeitlich verschobene Zustandsvektor a'($\tau il$) auf genau einen einzigen bestimmten Taktzyklus $\tau il$ zurückgeht, kann für jeden zeitlich verschobenen Zustandsvektor a'($\tau il$) eindeutig ein einziger zugehöriger Taktzyklus $\tau il$ zugewiesen werden.

Nach dem chinesischen Restklassensatz kann schließlich bei Kenntnis aller Moduluswerte $\tau il$, welche aus der Division des Taktzykluses $\tau i$ mit allen teilerfremden Faktoren $p_1$ der Sequenzklänge n entstehen, eindeutig ein einziger zugehöriger Taktzyklus $\tau i$ ermittelt werden.

Somit ist ein erfindungsgemäßes Verfahren gegeben, mit dem für jeden teilerfremden Faktor $p_1$ der Zykluslänge n ein zum Meßtaktzyklus $\tau x$ ausgelesener Zustandsvektor a ($\tau x$) jeweils ein zeitlich verschobener Zustandsvektor a'($\tau x$) = a ($\tau x*n/p_1$) ermittelbar ist, welcher nur noch mit insgesamt $p_1$ verschiedenen, zeitlich verschobenen Vergleichszustandsvektoren $a_{REF}'(\tau il)$ auf Identität verglichen werden muß. Ist für jeden teilerfremden Faktor $p_1$ ein zum ausgelesenen und zeitlich verschobenen Zustandsvektor a' ($\tau x$) identischer Vergleichszustandsvektor $a_{REF}'$ ($\tau xl$) gefunden, so kann, wie oben ausgeführt, eindeutig ein zugehöriger Taktzyklus $\tau xl$ angegebenen werden. Aus allen für jeden teilerfremden Faktor $p_1$ auf diese Weise ermittelten Taktzyklen $\tau xl$ kann, wie weiter unten gezeigt, der gesuchte zum ausgelesenen Zustandsvektor a($\tau x$) gehörige Taktzyklus $\tau x$ ermittelt werden.

Der zeitlich verschobene Zustandsvektors a'($\tau x$) = a($\tau x*n/p_1$) kann aus Gleichung (7) gewonnen werden, indem die Laufvariable i "Null" gesetzt wird und die Meßvariable x mit dem Faktor $n/p_1$ multipliziert wird. Aus Gleichung (9) in Kombination mit Gleichung (10) ergibt sich somit Gleichung (16):

$$a'(\tau x) = a(\tau(x*n/p_1)) = V^{x*n/p1} * a(0) =$$
$$= K^{n/p1} * a(0) \qquad\qquad (16)$$

Zur Bestimmung der in Gleichung (16) benötigten Koeffizienten der Substitutionsmatrix K wird das Schiebe-

register 4 zum Starttaktzyklus $\tau 0 = 0$ mit einem Startzustandsvektor a(0) gemäß Gleichung (17) belegt:

$$a(0) = (1,0,..,0) \qquad\qquad (17)$$

Mit der Belegung des Startzustandsvektors a(0) gemäß Gleichung (17) ergibt sich der erste Spaltenvektor $k_1$ der Substitutionsmatrix K bei zum Meßtaktzyklus $\tau x$ eingelesenen Zustandsvektor a($\tau x$) unter Anwendung von Gleichung (7) in Kombination mit Gleichung (8) vergleichsweise trivial gemäß der Beziehung in Gleichung (18) :

$$k_1 = a(\tau x) \qquad\qquad (18)$$

Mit dem ermittelten ersten Spaltenvektor $k_1$ der Substitutionsmatrix K kann der zweite Spaltenvektor $k_2$ der Substitutionsmatrix K unter Anwendung von Gleichung (7) in Kombination mit Gleichung (8) gemäß Gleichung (19) ermittelt werden.

$$k_2 = a(\tau(x+1)) + k_1 * a_1(\tau 1) \qquad\qquad (19)$$

Hierbei wird die Tatsache ausgenutzt, daß zum Taktzyklus $\tau 1$ einzig die Binärzustände $a_1(\tau 1)$ und $a_2(\tau 1)$ der ersten und zweiten Schieberegisterstufe $5_1$ und $5_2$ einen von Null verschiedenen Wert aufweisen. Die hierzu benötigten Zustandsvektoren $a(\tau_1)$ und a($\tau(x+1)$) können aus dem Startzustandsvektor a($\tau 0=0$) und dem zum Meßtaktzyklus $\tau x$ ausgelesenen Zustandsvektor a($\tau x$) unter Anwendung der mathematischen Beziehung in Gleichung (2) für die Binärzustände jeder einzelnen Schieberegisterstufe oder alternativ durch Anwendung von Gleichung (5) und (6) für die Binärzustände aller Schieberegisterzustufen insgesamt berechnet werden.

Ganz analog werden die übrigen Spaltenvektoren $k_3$ bis $k_m$ der Substitutionsmatrix K ermittelt. Diese werden sukzessive beginnend mit dem Spaltenvektor $k_3$ und endend mit dem Spaltenvektor $k_m$ gemäß Gleichung (20) berechnet:

$$k_i = a(\tau(x+i-1)) + \sum_{s=1}^{i-1} a_s(\tau(i-1)) * k_s \quad \text{für } i = 3 \text{ bis } m \qquad (20)$$

Auch hier wird die Tatsache ausgenutzt, daß für die Berechnung des Spaltenvektors $k_i$ der Substitutionsmatrix K zum Taktzyklus $\tau(i-1)$ einzig die Binärzustände $a_1(\tau(i-1))$ bis $a_{i-1}(\tau(i-1))$ der ersten bis i-1-ten Schieberegisterstufe $5_1$ bis $5_{i-1}$ einen von Null verschiedenen Wert aufweisen Die Zustansvektoren a($\tau 3$) bis a ($\tau(m-1)$) sowie a ($\tau(x+2)$) bis a ($\tau(x+m-1)$) werden aus den bereits berechneten Zustandsvektoren a($\tau 1$) und a($\tau(x+1)$) durch sukzessive Anwendung der mathematischen Beziehung in Gleichung (2) für die Binärzustände jeder einzelnen Schieberegisterstufe oder alternativ durch Anwendung von Gleichung (6) für die Binärzustände aller Schieberegisterzustufen berechnet.

Mit dern auf diese Weise ermittelten Spaltenvektoren $k_i$ ist die Substitutionsmatrix K aufzubauen, welche im nächsten Schritt einer Matrizenmultiplikation um den Faktor $n/p_1$ zur Bildung der Matrix $K^{n/p_1}$ zuzuführen ist. Eine effziente Berechnung der Matrix $K^{n/p_1}$ kann erzielt werden, indem der ganzzahlige Exponent $n/p_1$ gemäß Gleichung (21) in eine Summe von 2-er Faktoren zerlegt wird:

$$n/p_1 = \sum_{i=0}^{m-1} c_{li} * 2^i \qquad\qquad (21)$$

Der Faktor $c_{li}$ kann in Abhängigkeit der Existenz des zugehörigen Zweierexponenten $2^i$ den Wert "0" oder "1" annehmen. Die Matrix $K^{n/p_1}$ kann unter Anwendung der Ergebnisse der Zerlegung des Faktors $n/p_1$ gemäß Gleichung (21) in eine Summe von Matrizen $K^{2i}$ zerlegt werden, welche nur Matrizen mit Zweierexponenten $K^{2i}$ aufweisen, deren zugehöriger Faktor $c_{li}$ den Wert "1" aufweist:

$$K^{n/p_i} = \prod_{i \in \{i>0, c_{il}=1\}} K^{(2^i)} \qquad (22)$$

Auf diese Weise muß die Matrix $K^{n/p_1}$ nicht rechenaufwendig durch vielfache Matrizenmultiplikation ermittelt werden, sondern kann mittels Matrizenaddition von Matrizen $K^{2i}$ berechnet werden, welche vergleichsweise einfach durch mehrmaliges Quadrieren der Substitutionsmatrix K gewonnen werden.

Mit der über die Beziehung in Gleichung (22) ermittelten Matrix $K^{n/p_1}$ kann schließlich für jeden teilerfremden Faktor $p_1$ der zeitlich verschobene Zustandsvektor Zustandsvektors a'$(\tau x)$ = a $(\tau x*n/p_1)$ unter Anwendung von Gleichung (16) gewonnen werden.

Durch Vergleich aller zu den einzelnen teilerfremden Faktoren $p_1$ gehörigen zeitlich verschobenen Zustandsvektoren a'$(\tau x)$ mit allen möglichen Vergleichszustandsvektoren $a_{REF}$' $(\tau il)$ und auftretender Identität zwischen dem Zustandsvektor a'$(\tau x)$ und einem der Vergleichszustandsvektoren $a_{REF}$' $(\tau xl)$ können die zu den einzelen teilerfremden Faktoren $p_1$ gehörigen Taktzyklen $\tau xl$ ermittelt werden.

Der Vergleichszustandsvektor $a_{REF}$' $(\tau il)$ zum Taktzyklus $\tau il$ kann für jeden teilerfremden Faktor $p_1$ ausgehend von $a_{REF}$'$(\tau il=0)$= a' $(0)$= a$(0)$ unter Anwendung von Gleichung (16) mittels Substitution der Meßvariable x durch die Laufvariable i entsprechend Gleichung (23) vorab berechnet und anschließend in einem Speicher (11) abgelegt werden:

$$a_{REF}{}'(\tau il) = a_{REF}(\tau(i*n/p_1)) = V^{i*n/p1} * a_{REF}{}'(\tau il=0) \qquad (23)$$

In einer ersten Ausführungsform des erfindungsgemäßen Verfahrens werden im Rahmen einer Online-Lösung die Vergleichszustandsvektoren $a_{REF}$'$(\tau(i+1)l)$ zum Taktzyklus $\tau(i+1)l$ für jeden teilerfremden Faktor $p_1$ gemäß Gleichung (24) iterativ aus einem Vergleichszustandsvektor $a_{REF}$'$(\tau il)$ zum Taktzyklus $\tau il$ berechnet und unmittelbar mit dem ausgelesenen und zeitlich verschobenen Zustandsvektor a'$(\tau x)$ verglichen. Der Vergleichszustandsvektor $a_{REF}$' $(\tau(i+1)l)$ zum nächst höheren Taktzyklus $\tau(i+1)l$ innerhalb der reduziert zu betrachtenden Taktzyklen $\tau il$ ergibt sich für alle Laufvariablen i von 1 bis $p_1$-1, wie aus Gleichung (23) leicht zu erkennen ist, gemäß Gleichung (24) durch Iteration aus dem Vergleichszustandsvektor $a_{REF}$' $(\tau il)$ zum vorherigen Taktzyklus $\tau il$:

$$a_{REF}{}'(\tau(i+1)l) = V^{n/p_i} * a_{REF}{}'(\tau il) \qquad (24)$$

Eine iterative Bereichnung eines weiteren Vergleichszustandsvektor $a_{REF}$'$(\tau(i+2)l)$ unterbleibt, sobald Identität zwischen dem eingelesenen, zeitverschobenen Zustandsvektor a'$(\tau)$ und dem zu vergleichenden Vergleichszustandsvektor $a_{REF}$ $(\tau(i+1)l)$ besteht.

Der Vorteil der Online-Lösung gegenüber einer Offline-Lösung liegt darin, daß die iterative Berechnung der Vergleichszustandsvektoren $a_{REF}$'$(\tau il)$ abgebrochen werden kann, sobald ein zum ausgelesenen und zeitlich verschobenen Zustandsvektor a' $(\tau x)$ passender Vergleichszustandsvektor $a_{REF}$'$(\tau il)$ gefunden ist.

Ist der teilerfremde Faktor pl vergleichsweise groß, so ist der ausgelesene und zeitlich verschobene Zustandsvektor a'$(\tau x)$ mit einer Vielzahl von Vergleichszustandsvektoren $a_{REF}$' $(\tau il)$ - nämlich insgesamt $p_1$ Vergleichszustandsvektoren $a_{REF}$' $(\tau il)$ - zu vergleichen. Um den Berechnungsaufwand der Vergleichszustandsvektoren $a_{REF}$' $(\tau il)$ zu reduzieren, wird nur eine Teilmenge $a_{REF}$'' $(\tau il)$ der insgesamt $p_1$ Vergleichszustandsvektoren $a_{REF}$' $(\tau il)$ - i.a. nur die Vergleichszustandsvektoren $a_{REF}$' $(\tau il)$ zu den ersten o Taktzyklen der reduzierten, insgesamt $p_1$ Takltzyklen enthaltenden Taktzyklensequenz $\tau il$ - gemäß Gleichung (25) berechnet und in einem Speicher (11) abgelegt.

$$a_{REF}{}''(\tau(i+1)l) = V^{n/p_i} * a_{REF}{}''(\tau il) \text{ für } i=0 \text{ bis } o-1 \qquad (25)$$

Wird in einem ersten Vergleichszyklus des eingelesenen und zeitlich verschobenen Zustandsvektors a$(\tau x)$ mit der Teilmenge $a_{REF}$''$(\tau il)$ der Vergleichszustandsvektoren $a_{REF}$'$(\tau il)$ keine Identität zwischen dem eingelesenen und zeitlich verschobenen Zustandsvektor a $(\tau x)$ und einem der Zustandsvektoren der Teilmenge $a_{REF}$''$(\tau il)$ der Vergleichs-

zustandsvektoren $a_{REF}$'($\tau$il) ermittelt, so wird anstelle einer erneuten Berechnung einer weiteren Teilmenge $a_{REF}$''' ($\tau$il) der Vergleichszustandsvektoren $a_{REF}$' ($\tau$il) und eines Vergleichs des eingelesenen und zeitlich verschobenen Zustandsvektors a ($\tau$x) mit der erneut berechneten Teilmenge $a_{REF}$''' ($\tau$il) der Vergleichszustandsvektoren $a_{REF}$'($\tau$il) der eingelesene und zeitlich verschobene Zustandsvektor a($\tau$x) um insgesamt o*n/$p_1$ Taktzyklen gemäß Gleichung (26) zeitlich verschoben, um auf diese Weise die Zustandsvektoren a''($\tau$x) zu den den eingelesenen und zeitlich verschobenen Taktzyklen $\tau$x zeitlich nachfolgenden Taktzyklen mit der Teilmenge $a_{REF}$'' ($\tau$il) der Vergleichszustandsvektoren $a_{REF}$' ($\tau$il) zu vergleichen.

$$a''(\tau x) = V^{u \cdot n / p_1} * a'(\tau x) \qquad (26)$$

Der um insgesamt o*n/$p_1$ Taktzyklen zeitlich verschobene eingelesene Zustandsvektor a'' ($\tau$x) wird nun ebenfalls mit der Teilmenge $a_{REF}$'' ($\tau$il) der Vergleichszustandsvektoren $a_{REF}$' ($\tau$il) auf Identität überprüft. Wird abermals keine Identität zwischen eingelesenen und zeitlich verschobenen Zustandsvektor a'' ($\tau$x) und der Teilmenge $a_{REF}$'' ($\tau$il) der Vergleichszustandsvektoren $a_{REF}$'($\tau$il) festgestellt, so wird der eingelesene und zeitlich verschobene Zustandsvektor sooft auf diese Weise zeitlich verschoben und mit der Teilmenge $a_{REF}$'' ($\tau$il) der Vergleichszustandsvektoren $a_{REF}$' ($\tau$il) verglichen, bis ein zum eingelesenen und zeitlich verschobenen Zustandsvektor a'' ($\tau$x) passender Vergleichszustandsvektor in der Teilmenge $a_{REF}$'' ($\tau$il) der Vergleichszustandsvektoren $a_{REF}$'($\tau$il) gefunden ist. Der in der Teilmenge $a_{REF}$'' ($\tau$il) der Vergleichszustandsvektoren $a_{REF}$' ($\tau$i1) zum eingelesenen und w-fach zeitlich verschobenen Zustandsvektor a'' ($\tau$x) passende Vergleichszustandsvektor $a_{REF}$'' ($\tau$xl') liefert den zugehörigen Taktzyklus $\tau$xl'. Der zum teilerfremden Faktor $p_1$ gehörige gesuchte Taktzyklus $\tau$xl ergibt sich somit gemäß Gleichung (27):

$$\tau xl = \tau xl' + w * o \qquad (27)$$

Die Ermittlung des gesuchten Taktzykluses $\tau$x aus allen zu den teilerfremden Faktoren $p_1$ gehörigen Taktzyklen $\tau$xl, die jeweils dem Moduluswert $\tau$x|$p_1$ der Division des gesuchten Taktzykluses $\tau$x durch den teilerfremden Faktor $p_1$ entsprechen, wird im folgenden aufgezeigt.

Während im bisherigen Abschnitt des Verfahrens die Moduluswerte $\tau$xl des gesuchten Taktzykluses $\tau$x aus der Faktorzerlegung der Zykluslänge n in ihre insgesamt u teilerfremden Faktoren $p_1$ hervorgehen, ist im nun folgenden Abschnitt des Verfahrens der inverse Verfahrensweg zu beschreiten, indem ausgehend von einem teilerfremden Startfaktor $p_1$ sukzessive alle übrigen u-1 teilerfremden Faktoren $p_1$ hinzumultipliziert werden, bis sich nach insgesamt u-1 Mulitiplikationen aller übrigen u-1 teilerfremden Faktoren die Zykluslänge n wieder ergibt. Gemäß Gleichung (28) erhält der teilerfremde Startfaktor für die "rückwärts laufende Iteration", dem der teilerfremde Faktor $p_1$ zugewiesen wird, den Index u+1:

$$p_{u+1} = p_1 \qquad (28)$$

Die Zwischenprodukte $p_{u+v}$ der sukzessiven Multiplikationen ergeben sich gemäß Gleichung (29):

$$p_{u+v} = \prod_{l=1}^{v} p_l \qquad \text{für } v= 2 \text{ bis } u$$

$$(29)$$

Das Zwischenprodukt $p_{u+v}$ in Gleichung (29) kann auch als Iteration aus dem vorherigen Zwischenprodukt $p_{u+v-1}$ gemäß Gleichung (30) analog dargestellt werden:

$$p_{u+v} = p_{u+v-1} * p_v \qquad (30)$$

Für jeden dieser Zwischenprodukte $p_{u+v}$ der teilerfremden Faktoren $p_1$ wird der korrespondierende Moduluswert

$\tau(u+v)=\tau x|p_{u+v}$ ermittelt, bis nach insgesamt u-1 Iterationsschritten der zum Endprodukt $p_{2u}=n$ korrespondierende Moduluswert $\tau_{2u}$ mit dem gesuchten Taktzyklus $\tau x$ konvergiert.

Die zu den Zwischenprodukten $p_{u+v}$ gehörigen Moduluswerte $\tau(u+v)$ können iterativ ermittelt werden, indem für die Iterationsschritte u+v, u+v-1 und v der Gleichung (30) der gesuchte Taktzyklus $\tau x$ jeweils - invers zur Modulusdivision - als Addition des Modulus und des Produkts aus Divisor und Dividend der Modulusdivision in der Dreifachgleichung (31) dargestellt wird :

$$\tau x = \tau(u+v) + k * p_{u+v} = \tau(u+v-1) + f * p_{u+v-1} =$$
$$= \tau(v) + e * p_v \qquad (31)$$

Die ganzzahligen Faktoren k, e und f stellen die Dividenden der jeweiligen Modulusdivisionen dar.

Zur Ermittlung der Iterationsformel für die Berechnung des Moduluswertes $\tau(u+v)$ aus dem Moduluswert $\tau(u+v-1)$ wird die linke und halblinke mathematische Beziehung der Dreifachgleichung (31) herangezogen und gemäß Gleichung (31) unter Anwendung von Gleichung (30) umgeformt :

$$\tau(u+v) = \tau(u+v-1) + f * p_{u+v-1} - k * p_{u+v} =$$
$$= \tau(u+v-1) + (f - k * p_u) * p_{u+v-1} \qquad (32)$$

Für die Bestimmung des Faktors k und für die Überführung des Terms $k*p_u$ in einen für eine Iterationsformel geeigneten Term, der lediglich von den Faktoren $\tau(u+v)$, $\tau(u+v-1)$ und/oder $p_{u+v-1}$ abhängig ist, wird gemäß Gleichung (33) eine Differenzgröße d zwischen den bekannten Moduluswerten $\tau(v)$ und $\tau(u+v-1)$ eingeführt, in der die mathematische Beziehung der rechten und halbrechten Seite der Dreifachgleichung (31) benutzt wird:

$$d = \tau(u+v-1) - \tau(v) = f * p_{u+v-1} + e * p_v \qquad (33)$$

Gleichung (33) weist die zwei Unbekannten e und f auf. In einem ersten Lösungsschritt werden jeweils die unbekannten Faktoren e bzw. f in Abhängigkeit der bekannten Differenzgröße d ermittelt. Hierzu wird eine Gleichung (34) konstruiert, die ebenfalls wie die rechte Seite der Gleichung (33) eine summarische Zerlegung der teilerfremden Faktoren $p_v$ und $p_{u+v-1}$ enthält. Die summarische Zerlegung der teilerfremden Faktoren $p_v$ und $p_{u+v-1}$ in Gleichung (34) ergibt genau den Wert "1", um einen Koeffizientenvergleich zwischen der summarischen Zerlegung der teilerfremden Faktoren $p_v$ und $p_{u+v-1}$ gemäß Gleichung (35) durchführen zu können:

$$y * p_v - z * p_{u+v-1} = 1 \qquad (34)$$

$$d = d * (y * p_v - z * p_{u+v-1}) = d * y * p_v - d * z * p_{u+v-1}$$
$$= e * p_v + f * p_{u+v-1} \qquad (35)$$

Der Koeffizientenvergleich ergibt, daß der Faktor e dem Produkt d*y und der Faktor f dem Produkt d*z entspricht.

Durch Bestimmung der Unbekannten y und z in Gleichung (34) kann jeweils die Unbekannte e bzw. f ermittelt werden. Da nur ein einziges ganzzahliges Unbekannten-Paar (y;z) Gleichung (34) erfüllen kann, kann dieses durch sukzessives Inkrementieren oder Dekrementieren ermittelt werden. Der mögliche Wertebereich der Unbekannten y liegt im Intervall $-p_{u+v-1} < y < p_{u+v-1}$, der mögliche Wertebereich der Unbekannten z liegt im Intervall $-p_v < z < p_v$

Mit der mittels Gleichung (34) iterativ ermittelten Unbekannten z kann Gleichung (32) unter Anwendung der linken Gleichungsbeziehung von Doppelgleichung (33) und Einführung eines weiteren ganzzahligen Faktors $\varepsilon=k/z$ in Gleichung (36) übergeführt werden.

$$\tau(u+v) = \tau(u+v-1) + (d - \varepsilon * p_u) * z * p_{u+v-1} \qquad (36)$$

Führt man in Gleichung (36) den Moduluswert $d_u$ der Division der Differenzgröße d durch den teilerfremden Faktor $p_u$ ein, so geht Gleichung (36) in Gleichung (37) über:

$$\tau(u+v) = \tau(u+v-1) + d_u * z * p_{u+v-1} \qquad (37)$$

Wird in Gleichung (37) die Größe $h=d_u * z$ eingeführt, so ergibt sich Gleichung (38) zur iterativen Berechnung der Taktzyklen $\tau(u+v)$, welche für $\tau(u+v)=\tau 2u$ zum gesuchten Taktzyklus $\tau x$ konvergiert.

$$\tau(u+v) = \tau(u+v-1) + h * p_{u+v-1} \qquad (38)$$

Aufbauend auf den bisherigen Herleitungen der mathematischen Beziehungen werden die zwei Ausführungsformen des erfindungsgemäßen Verfahrens zur Ermittlung der Anzahl $\Delta\tau$ von abgelaufenen Taktzyklen in einem binären Zufallsgenerator gemäß Fig. 2, 2A und 2C vorgestellt.

Im übergeordneten Flußdiagramm in Fig. 2, das für alle zwei Ausführungsformen des Verfahrens Gültigkeit besitzt, werden in einem ersten Verfahrensschritt S10 die Binärzustände aller m Schieberegisterstufen zu einem Zeitpunkt $t_x$, der der Beginn $t_1$ und/oder das Ende $t_2$ des zu überwachenden Zeitintervalls $\Delta t$ sein kann, eingelesen und einem Zustandsvektor $a(\tau x)$ zugewiesen. Der Meßtaktzyklus $\tau x$ ist der zum Zeitpunkt $t_x$ gehörige Taktzyklus. Der Einfachheit halber wird im folgenden nicht mehr zwischen Beginn $t_1$ und Ende $t_2$ des zu überwachenden Zeitintervalls $\Delta t$ unterschieden, sondern nur noch der allgemeine Meßzeitpunkt $t_x$ und der dazugehörige Meßtakzyklus $\tau_x$ verwendet.

Im nächsten Verfahrensschritt S20 werden die Koeffizienten der Substitutionsmatrix K, die der x-fach multiplizierten Verschiebematrix V entspricht, berechnet. Die einzelnen Spaltenvektoren $k_1$ der Substitutionsmatrix können entsprechend der Gleichungen (18), (19) und (20) - Gleichung (18) für den Spaltenvektor $k_1$, Gleichung (19) für den Spaltenvektor $k_2$ und Gleichung (20) für die Spaltenvektoren $k_3$ bis $k_m$ - berechnet werden. Hierbei handelt es sich um eine iterative Berechnung, so daß für die Berechnung des Spaltenvektor $k_1$ alle in der Substitutionsmatrix K links des Spaltenvektors $k_1$ angeordneten Spaltenvektoren $k_1$ bis $k_{1-1}$ in vorherigen Iterationsschritten berechnet werden müssen. Die insbesondere in den Gleichungen (19) und (20) benötigten Zustandvektoren $a(\tau(i-1))$ und $a(\tau(x+i-1))$ für alle i von 2 bis m können entweder getrennt für jede einzelne Schieberegisterstufe mittels Gleichung (2) iterativ aus den Zustandvektoren $a(\tau x)$ und $a(0)$ oder für den gesamten Zustandsvektor mittels Gleichung (5) und (6) berechnet werden.

Im nächsten Verfahrensschritt S30 wird für jeden teilerfremden Faktor $p_1$ der Zykluslänge n die jeweilige Matrix $K^{n/pl}$ berechnet, mit der anschließend der zum eingelesenen Zustandsvektor $a(\tau x)$ um den Faktor $n/p_1$ zeitlich verschobene Zustandsvektor $a'(\tau x)$ gemäß Gleichung (16) aus dem Startzustandsvektor $a(0)$ berechnet wird.

Die Matrizen $K^{n/p_1}$ können sehr effizient berechnet werden, indem die jeweiligen Exponenten $n/p_1$ gemäß Gleichung (21) in eine Summe von 2-er Potenzen zerlegt werden, mittels derer die Matrizen $K^{n/p_l}$ gemäß Gleichung (22) in eine Summe von K-Matrizen mit 2-er Exponenten $K^{2^i}$ zerlegt werden, die jeweils vergleichsweise einfach durch mehrfaches Quadrieren einer Substitutionsmatrix K hervorgehen.

Im nächsten Verfahrensschritt S40 erfolgt der Vergleich des eingelesenen, um den Faktor $n/p_1$ jeweils zeitlich verschobenen Zustandsvektors $a'(\tau x)$ mit jeweils insgesamt $p_1$ um den Faktor $n/p_1$ zeitlich verschobenen Vergleichszustandsvektoren $a_{REF}'(\tau il)$. Da die Ermittlung der Vergleichszustandsvektoren $a_{REF}'(\tau il)$ wie auch die Art des Vergleichs zwischen dem eingelesenen, zeitlich verschobenen Zustandsvektor $a'(\tau x)$ und den jeweils zu untersuchenden Vergleichszustandsvektoren $a_{REF}'(\tau il)$ zwischen den einzelnen Ausführungsformen unterschiedlich ist, wird auf die Beschreibung des zu den zwei Ausführungsformen passenden Verfahrensschritt S40 weiter unten verwiesen. Ergebnis des Verfahrensschritts S40 ist bei allen zwei Ausführungsformen ein zum eingelesenen, zeitlich verschobenen Zustandsvektor $a'(\tau x)$ passender zeitlich verschobener Vergleichszustandsvektor $a_{REF}'(\tau xl)$ für jeden teilerfremden Faktor $p_1$.

Im nächsten Verfahrensschritt S50 werden die zu den gefundenen Vergleichszustandsvektoren $a_{REF}'(\tau xl)$ eindeutig gehörenden Taktzyklen $\tau x1$ für jeden der insgesamt j teilerfremden Faktor $p_1$ aus dem Speicher ausgelesen.

Im abschließenden Verfahrensschritt S60 werden alle zu den insgesamt j teilerfremden Faktoren $p_1$ jeweils ermittelten Taktzyklen $\tau xl$, die Moduluswerte der Division des gesuchten Taktzyklus $\tau x$ durch den jeweiligen teilerfremden Faktor $p_1$ darstellen, zur iterativen Berechnung des gesuchten Taktzykluses gemäß Gleichung (38) verwendet. Die hierbei benötigten Zwischenprodukte $p_{u+v-1}$ der teilerfremden Faktoren $p_1$ werden entsprechend Gleichung (29) iterativ aus dem jeweiligen vorhergehenden Zwischenprodukt $p_{u+v-2}$ und dem jeweiligen teilerfremden Faktor $p_v$ berechnet. Der unbekannte Faktor z kann in Kombination mit dem ebenfalls unbekannten Faktor y bei bekannten teilerfremden Faktor $p_v$ und bekannten Zwischenprodukt $p_{u+v-1}$ durch iteratives Inkrementieren oder Dekrementieren zur Erfüllung von Gleichung (34) ermittelt werden. Schließlich kann der unbekannte Moduluswert $d_u$ bei Division der Differenzgröße d durch den teilerfremden Faktor $p_u$ auch ermittelt werden, da die Differenzgröße d gemäß Gleichung (33) aus den bekannten Taktzyklen $\tau_{u+v-1}$ und $\tau_v$ hervorgeht.

Um die Anzahl $\Delta\tau$ von abgelaufenen Taktzyklen eines binären Zufallsgenerators zu ermitteln, wird der für den Startzeitpunkt $t_1$ gehörige Taktzyklus $\tau1$ und der für den Endezeitpunkt $t_2$ gehörige Taktzyklus $\tau2$ des zu messenden Zeitintervalls $\Delta t$ gemäß dem in Fig. 2 dargestellten erfindungsgemäßen Verfahren ermittelt und die Anzahl der Taktzyklen $\Delta\tau$ von abgelaufenen Taktzyklen gemäß Gleichung (39) aus der Differenz von $\tau1$ und $\tau2$ berechnet:

$$\Delta\tau = \tau2 - \tau1 \qquad\qquad (39)$$

Wird als Startzeitpunkt die Initialisierung des binären Zufallsgenerators gewählt, so ist der Taktzyklus $\tau1$ in Gleichung (39) mit dem Wert "0" zu belegen.

Der Verfahrensschritt S40 gliedert sich bei der ersten in Fig. 2A gezeigten Ausführungsform des erfindungsgemäßen Verfahrens in einen ersten Unterverfahrensschritt S40B1, in dem für jeden teilerfremden Faktor $p_1$ auf der Basis der Verschiebematrix V nach Gleichung (6) die modifizierte Verschiebematrix $V^{n/p}{}_l$ berechnet wird.

Anschließend wird sukzessive im Unterverfahrensschritt S40B2 für jeden teilerfremden Faktor $p_1$ der zeitlich verschobene Vergleichszustandvektor $a_{REF}$'($\tau$il) zum Taktzyklus $\tau$il aus dem Vergleichszustandvektor $a_{REF}$ ($\tau$(i-1)l) zum vorherigen Taktzyklus $\tau$(i-1)l iterativ gemäß Gleichung (24) ermittelt. Die Iteration beginnt jeweils beim Startvergleichszustandsvektor $a_{REF}$' (0) =a (0) .

Im darauffolgenden Unterverfahrensschritt S40B3 wird der eingelesene, zeitlich verschobene Zustandsvektor a'($\tau$x) jeweils für jeden teilerfremden Faktor $p_1$ mit dem iterativ ermittelten Vergleichszustandsvektor $a_{REF}$' ($\tau$il) verglichen.

Wird im nächsten Unterverfahrensschritt S40B4 keine Identität zwischen dem eingelesenen, zeitlich verschobenen Zustandsvektor a'($\tau$x) und dem jeweils für jeden teilerfremden Faktor $p_1$ iterativ ermittelten Vergleichszustandsvektor $a_{REF}$'' ($\tau$il) festgestellt, so wird ein für den jeweiligen teilerfremden Faktor $p_1$ gehöriger Vergleichszustandsvektor $a_{REF}$'($\tau$(i+1)l) zum nachfolgenden Taktzyklus $\tau$(i+1)l gemäß Gleichung (24) berechnet und dem Vergleich mit dem eingelesenen, zeitlich verschobenen a'($\tau$x) im Unterverfahrensschritt S40B3 zugeführt. Andernfalls ist der passende Vergleichszustandsvektor $a_{REF}$'($\tau$xl) gefunden und das erfindungsgemäße Verfahren wird mit Verfahrensschritt S50, wie weiter oben dargestellt, fortgesetzt.

In der zweiten in Fig. 2C dargestellten Ausführungsform des Verfahrens werden in einem Verfahrensschritt S00C für teilerfremden Faktor $p_1$ mit großen Werten insgesamt o verschiedene modifizierte Verschiebematrizen $V^{i*n/p}{}_1$ aus der ursprünglichen Verschiebematrix V gemäß Gleichung (6) berechnet, wobei o ein Wert kleiner als $p_1$.

Im darauffolgenden Verfahrensschritt S05C werden für teilerfremde Faktor $p_1$ mit hohen Werten jeweils Untermengen $a_{REF}$'' ($\tau$il) von jeweils insgesamt o Vergleichszustandsvektoren $a_{REF}$ '($\tau$il) mittels der jeweiligen modifizierten Verschiebematrizen $V^{i*n/pl}$ aus Verfahrensschritt S00C gemäß Gleichung (23) aus dem Startvergleichszustandsvektor $a_{REF}$'(0)=a(0) offline berechnet.

Der Verfahrensschritt S40 gliedert sich bei der zweiten Ausführungsform in einen ersten Unterverfahrensschritt S40C1, in dem der eingelesene und in Verfahrensschritt S30 zeitlich verschobene Zustandsvektor a ($\tau$x) für jeden großen teilerfremden Faktor $p_1$ mit jeweils allen o Vergleichszustandsvektoren $a_{REF}$'($\tau$il) aus der Untermenge $a_{REF}$'' ($\tau$il) auf Identität verglichen wird.

Falls keine Übereinstimmung zwischen dem eingelesenen, zeitlich verschobenen Zustandsvektor a'($\tau$x) und allen o Vergleichszustandsvektoren $a_{REF}$'($\tau$il) der zum jeweiligen teilerfremden Faktor $p_1$ gehörigen Untermenge $a_{REF}$'' ($\tau$il) vorliegt, wird im Unterverfahrensschritt S40C2 der eingelesene, zeitlich verschobene Zustandsvektor a'($\tau$x) gemäß Gleichung (26) mittels der Verschiebematrix $V^{o*n/p}{}_l$ um insgesamt o*n/$p_1$ Taktzyklen zur Bildung des neuen zeitlich verschobenen Zustandsvektors a''($\tau$x) zeitlich verschoben.

Mit den um o*n/$p_1$ Taktzyklen zeitlich verschobenen eingelesenen Zustandsvektor a''($\tau$x) wird im nächsten Unterverfahrensschritt S40C3 ein Vergleich mit der Untermenge $a_{REF}$'' ($\tau$il) der Vergleichszustandsvektoren $a_{REF}$' ($\tau$il) anstelle eines äqivalenten Vergleichs des eingelesenen, zeitlich verschobenen Zustandsvektor a'($\tau$x) mit den der Untermenge $a_{REF}$'' ($\tau$il) nachfolgenden o Vergleichszustandsvektoren $a_{REF}$'($\tau$il) hinsichtlich Identität durchgeführt.

Liegt keine Übereinstimmung zwischen dem um o*n/$p_1$ Taktzyklen zeitlich verschobenen, eingelesenen Zustandsvektor a''($\tau$x) und einem der insgesamt o Vergleichszustandsvektoren $a_{REF}$' ($\tau$il) aus der Untermenge $a_{REF}$'' ($\tau$il) vor, wird der eingelesene, und im Unterfahrensschritt S40C2 um insgesamt o*n/$p_1$ Taktzyklen zeitlich verschobene Zustandsvektor a''($\tau$x) im Unterverfahrensschritt S40C4 um weitere o*n/$p_1$ Taktzyklen gemäß Gleicung (26) zeitlich verschoben und dem Vergleich mit den insgesamt o Vergleichszustandsvektoren $a_{REF}$' ($\tau$il) der Untermenge $a_{REF}$'' ($\tau$il)

in Unterverfahrensschritt S40C3 zugeführt.

Wird in einem der Unterverfahrensschritte S40C2 oder S40C4 zum eingelesenen und zeitlich verschobenen Zustandsvektor a'' ($\tau$x) ein passender Vergleichszustandvektor $a_{REF}$'($\tau$xl') aus der Untermenge $a_{REF}$'' ($\tau$il) der insgesamt o Vergleichszustandsvektoren $a_{REF}$' ($\tau$il) gefunden, so wird im nächsten Unterverfahrensschritt S50C anstelle des Verfahrensschritt S50 der ersten Ausführungsform des erfindungsgemäßen Verfahren in Fig. 2 der zum gefundenen Vergleichszustandsvektor $a_{REF}$'($\tau$xl') gehörige Taktzyklus $\tau$xl' aus dem Speicher ausgelesen. Aus dem für den jeweiligen teilerfremden Faktor $p_1$ mit großem Wert ermittelten Taktzyklus $\tau$xl' wird entsprechend der insgesamt w durchgeführten Verschiebe-Iterationen der tatsächliche zum jeweiligen teilerfremden Faktor $p_1$ gehörige Taktzyklus $\tau$x1 gemäß Gleichung (27) berechnet. Anschließend wird das Verfahren mit dem Verfahrensschritt S60, wie oben dargestellt, fortgefahren.

Die Erfindung ist nicht auf die dargestellten zwei Ausführungsformen beschränkt. Insbesondere können in den Such- und Vergleichsoperationen der Verfahrenschritte S40, S40A, S40C1 und S40C3 andere numerische Such- und Sprungverfahren eingesetzt werden. Auch können die Merkmale aller zwei Ausführungsformewn vorteilhaft kombiniert werden.

**Patentansprüche**

1. Verfahren zur Ermittlung der Anzahl ($\Delta\tau$) von zwischen zwei Zeitpunkten $t_1$, $t_2$ abgelaufenen Taktzyklen eines binären Zufallsgenerators (1), der zur Erzeugung einer binären Zufallsfolge s($\tau$i) mit Zykluslänge n ein Schieberegister (4) mit mindestens einer an seinen Eingang (8) zurückgeführten Schieberegisterstufe ($5_1$, $5_2$,.., $5_m$) umfasst, mit folgenden Verfahrensschritten:

   • Auslesen von Zuständen aller Schieberegisterstufen ($5_1$, $5_2$, .., $5_m$) zu den zu den zwei Zeitpunkten t1,t2 jeweils gehörigen Taktzyklen $\tau$1,$\tau$2 in jeweils einen Zustandsvektor a($\tau$1),a($\tau$2),
   • zeitliches Verschieben der Zustandsvektoren a($\tau$1), a($\tau$2) für jeden teilerfremden Faktor $p_1$ der Zykluslänge n zu jeweils einem um den jeweiligen Faktor n/$p_1$ zeitlich verschobenen Zustandsvektor a'($\tau$1), a'($\tau$2) gemäß

   der mathematischen Beziehung $a'(\tau1) = a(\tau1 \cdot \dfrac{n}{p_l})$ bzw. $a'(\tau2) = a(\tau2 \cdot \dfrac{n}{p_l})$ ,

   wobei: gilt $n = \prod\limits_{l=1}^{u} p_l$ ,

   • sukzessives iteratives Berechnen eines zum jeweiligen teilerfremden Faktor $p_1$ gehörigen, um den Faktor n/$p_1$ zeitlich verschobenen Vergleichszustandsvektors $a_{REF}$'($\tau$(i+1)1) zum Taktzyklus $\tau$(i+1)1 aus einem vorab gespeicherten Vergleichszustandsvektor $a_{REF}$'($\tau$i1) zum Taktzyklus $\tau$i1 nach folgender Iterationsformel

   $$a_{REF}'(\tau(i+1)1) = a_{REF}(\tau(i+1) \cdot \frac{n}{p_l}) = V^{n/p_l} \cdot a_{REF}'(\tau i1) = V^{n/p_l} \cdot a_{REF}(\tau i \cdot \frac{n}{p_l})$$ mit einer Verschiebematrix

   $$V = \begin{bmatrix} g_1 & g_2 & g_3 & \cdots & g_{m-3} & g_{m-2} & g_{m-1} & g_m \\ 1 & 0 & 0 & \dots & 0 & 0 & 0 & 0 \\ \vdots & \vdots & \vdots & \dots & \vdots & \vdots & \vdots & \vdots \\ 0 & 0 & 0 & \dots & 0 & 1 & 0 & 0 \\ 0 & 0 & 0 & \dots & 0 & 0 & 1 & 0 \end{bmatrix},$$

   wobei über den zugehörigen Koeffizienten $g_j$ des Vektors g = [$g_1$ $g_2$ .. $g_m$] festgelegt wird, welcher Ausgang einer Schieberegisterstufe ($5_j$) des Schieberegisters (4) über einen Modulus-2-Adierer (7) an den Eingang (8) des Schieberegisters (4) rückgekoppelt wird,

• unmiltelbares Vergleichen jedes um den jeweiligen Faktor $n/p_1$ zeitlich verschobenen Zustandsvektors a'($\tau$1), a'($\tau$2) mit dem zum jeweiligen teilerfremden Faktor $p_1$ gehörigen Vergleichszustandsvektor $a_{REF}$'($\tau(i+1)1$),

• Ermitteln des zum jeweiligen teilerfremden Faktor $p_1$ gehörigen Moduluswertes $\tau$1l,$\tau$2l und Abbrechen des iterativen Berechnens eines weiteren Vergleichszustandsvektors $a_{REF}\,´(\tau(i+2)1) = a_{REF}(\tau(i+2)\cdot\dfrac{n}{p_l})$

zum Taktzyklus $\tau(i+2)1$ bei Identität zwischen dem um den jeweiligen Faktor $n/p_1$ zeitlich verschobenen Zustandsvektor a'($\tau$1),a'($\tau$2) und einem der zum jeweiligen teilerfremden Faktor $p_1$ gehörigen Vergleichszustandsvektoren $a_{REF}$'($\tau(i+1)1$)

• iteratives Berechnen der zu den beiden Zeitpunkten $t_1$, $t_2$ gehörigen Takyklen $\tau$1, $\tau$2 aus jeweils allen zu den jeweiligen teilerfremden Faktoren $p_1$ gehörigen Moduluswerten $\tau$1l, $\tau$2l und

• Berechnen der Anzahl ($\Delta\tau$) von abgelaufenen Taktzyklen aus der Differenz der Taktzyklen $\tau$1, $\tau$2 und Anzeigen des Ergebnisses ($\Delta\tau$) auf einer Anzeige-Einrichtung (3).

2. Verfahren zur Ermittlung der Anzahl von abgelaufenen Taktzyklen eines binären Zufallsgenerators nach Anspruch 1,
   **dadurch gekennzeichnet,**
   **dass** die den Zeitpunkten $t_1$,$t_2$ entsprechenden Taktzyklen $\tau$1,$\tau$2 jeweils aus allen zu den jeweiligen teilerfremden Faktoren $p_1$ gehörigen Moduluswerten $\tau$1l, $\tau$2l durch iterative Berechnung ermittelt werden.

3. Verfahren zur Ermittlung der Anzahl von abgelaufenen Taktzyklen eines binären Zufallsgenerators nach Anspruch 1 oder 2,
   **dadurch gekennzeichnet,**
   **dass** der Zeitpunkt $t_1$ der Initialisierungszeitpunkt des binären Zufallsgenerators (1) ist, der zugehörige Zustandsvektor a(0) ein die Initialisierungswerte der Schieberegisterstufen $(5_1,5_2,..,5_m)$ beinhaltender Zustandsvektor ist, der zugehörige Taktzyklus $\tau$1 Null ist und die Anzahl ($\Delta\tau$) der abgelaufenen Taktzyklen dem Taktzyklus $\tau$2 entspricht.

4. Vorrichtung zur Ermittlung der Anzahl ($\Delta\tau$) von zwischen zwei Zeitpunkten $t_1$, $t_2$ abgelaufenen Taktzyklen eines binären Zufallsgenerators (1)
   mit einem binären Zufallsgenerator (1), der zur Erzeugung einer binären Zufallsfolge s($\tau$i) mit Zykluslänge n ein Schieberegister (4) mit mindestens einer an seinen Eingang (8) zurückgeführten Schieberegisterstufe $(5_1,5_2,..,5_m)$ umfasst, und
   mit einer Prozessor-Einheit (10), die über eine Ein-/ Ausgabe-Baugruppe (9) die Binärzustände aller Schieberegisterstufen $(5_1, 5_2,.., 5_m)$ zu den beiden Zeitpunkten $t_1$, $t_2$ einliest, jeweils zu einem Zustandsvektor a($\tau$1),a($\tau$2) zusammenfasst, die Zustandsvektoren a($\tau$1),a($\tau$2) jeweils für jeden teilerfremden Faktor $p_1$ der Zykluslänge n zu um den jeweiligen Faktor $n/p_1$ zeitlich verschobenen Zustandsvektoren a'($\tau$1),a'($\tau$2) gemäß der mathematischen

   Beziehung $\quad a´(\tau1) = a(\tau1\cdot\dfrac{n}{p_l})\quad$ bzw. $\quad a´(\tau2) = a(\tau2\cdot\dfrac{n}{p_l})\quad$ zeitlich verschiebt, wobei gilt

   $$n = \prod_{l=1}^{u} p_l \qquad$$ und wobei die Prozessor-Einheit (10) sukzessive einen zum jeweiligen teilerfremden Faktor

   $p_1$ gehörigen und um den Faktor $n/p_1$ zeitlich verschobenen Vergleichszustandsvektor $a_{REF}$'($\tau(i+1)1$) zum Taktzyklus $\tau(i+1)1$ aus einem vorab gespeicherten Vergleichszustandsvektor $a_{REF}$'($\tau i$1) zum Taktzyklus $\tau i$1 nach folgender

   Iterationsformel $\quad a_{REF}\,´(\tau(i+1)1) = a_{REF}(\tau(i+1)\cdot\dfrac{n}{p_l}) = V^{n/p_l}\cdot a_{REF}\,´(\tau i1) = V^{n/p_l}\cdot a_{REF}(\tau i\cdot\dfrac{n}{p_l})\quad$ mit einer Verschiebematrix

$$V = \begin{bmatrix} g_1 & g_2 & g_3 & \cdots & g_{m-3} & g_{m-2} & g_{m-1} & g_m \\ 1 & 0 & 0 & \ldots & 0 & 0 & 0 & 0 \\ \vdots & \vdots & \vdots & \ldots & \vdots & \vdots & \vdots & \vdots \\ 0 & 0 & 0 & \ldots & 0 & 1 & 0 & 0 \\ 0 & 0 & 0 & \ldots & 0 & 0 & 1 & 0 \end{bmatrix}$$

iterativ berechnet, wobei über den zugehörigen Koeffizienten $g_j$ des Vektors $g = [g_1\ g_2\ ..\ g_m]$ festgelegt ist, welcher Ausgang einer Schieberegisterstufe ($5_j$) des Schieberegisters (4) über einen Modulus-2-Adierer (7) an den Eingang (8) des Schieberegisters (4) rückgekoppelt wird,

wobei die Prozessor - Einheit (10) die um den jeweiligen Faktor $n/p_1$ zeitlich verschobenen Zustandsvektoren a' ($\tau$1),a'($\tau$2) mit dem zum jeweiligen teilerfremden Faktor $p_1$ gehörigen Vergleichszustandsvektor $a_{REF}$'($\tau$il) unmittelbar vergleicht, bei Identität zwischen den um den jeweiligen Faktor $n/p_1$ zeitlich verschobenen Zustandsvektoren a'($\tau$1), a'($\tau$2) und dem zum jeweiligen teilerfremden Faktor $p_1$ gehörigen Vergleichszustandsvektor $a_{REF}$'($\tau$i1) die zum jeweiligen teilerfremden Faktor $p_1$ gehörigen Moduluswerte $\tau$1l, $\tau$2l ermittelt und das iterative Berechnen eines weiteren Vergleichszustandsvektors $a_{REF}{}'(\tau(i+2)1) = a_{REF}(\tau(i+2) \cdot \dfrac{n}{p_l})$ zum Taktzyklus $\tau(i+2)1$ abbricht und die zu den beiden Zeitpunkten $t_1$, $t_2$ gehörigen Taktzyklen $\tau$1, $\tau$2 aus jeweils allen zu den jeweiligen teilerfremden Faktoren $p_1$ gehörigen Moduluswerten $\tau$1l,$\tau$2l und die Anzahl ($\Delta\tau$) von abgelaufenen Taktzyklen aus der Differenz der Taktzyklen $\tau$1, $\tau$2 iterativ berechnet.

5. Vorrichtung zur Ermittlung der Anzahl ($\Delta\tau$) von abgelaufenen Taktzyklen eines binären Zufallsgenerators nach Anspruch 4,
   **dadurch gekennzeichnet,**
   **dass** die Vorrichtung zusätzlich eine Anzeige-Einrichtung (3) zur Darstellung der Anzahl ($\Delta\tau$) von abgelaufenen Taktzyklen eines binären Zufallsgenerators (1) enthält.

**Claims**

1. Method for determining the number ($\Delta\tau$) of elapsed clock cycles between two timing points $t_1$, $t_2$ of a binary random generator (1), which, in order to generate a binary random sequence s($\tau$i) with cycle length n, comprises a shift register (4) with at least one shift-register stage ($5_1$, $5_2$, ..., $5_m$) fed back to its input (8), with the following procedural stages:

   - reading out of states of all shift-register stages ($5_1$, $5_2$, ..., $5_m$) at the clock cycles $\tau$1, $\tau$2 associated respectively with the two timing points t1, t2 in each case into a state vector a($\tau$1), a($\tau$2),
   - time displacement of the state vectors a($\tau$1), a($\tau$2) for every prime factor $p_1$ of the cycle length n in each case to a state vector a'($\tau$1), a'($\tau$2), displaced in time by the respective factor $n/p_1$ according to the mathematical

   relationship $a'(\tau 1) = a(\tau 1 \cdot \dfrac{n}{p_l})$ or $a'(\tau 2) = a(\tau 2 \cdot \dfrac{n}{p_l})$, wherein the following applies $n = \prod\limits_{l=1}^{u} p_l$,

   - successive, iterative calculation of a comparison state vector $a_{REF}$'($\tau$(i+1)1) at the clock cycle ($\tau$(i+1)1) associated with the respective prime factor $p_1$ displaced in time by the factor $n/p_1$ from a previously-buffered comparison state vector $a_{REF}$'($\tau$i1) at the clock cycle $\tau$i1 according to the following iteration formula:

   $$a_{REF}{}'(\tau(i+1)1) = a_{REF}(\tau(i+1) \cdot \frac{n}{p_l}) = V^{n/p_l} \cdot a_{REF}{}'(\tau i1) = V^{n/p_l} \cdot a_{REF}(\tau i \cdot \frac{n}{p_l}) \quad \text{with}$$

   a shift matrix

$$V = \begin{pmatrix} g_1 & g_2 & g_3 & \cdots & g_{m-3} & g_{m-2} & g_{m-1} & g_m \\ 1 & 0 & 0 & \cdots & 0 & 0 & 0 & 0 \\ \vdots & \vdots & \vdots & \cdots & \vdots & \vdots & \vdots & \vdots \\ 0 & 0 & 0 & \cdots & 0 & 1 & 0 & 0 \\ 0 & 0 & 0 & \cdots & 0 & 0 & 1 & 0 \end{pmatrix},$$

wherein it is specified via the associated coefficients $g_j$ of the vector g=[$g_1$ $g_2$ .. $g_m$], which output of a shift-register stage ($5_j$) of the shift register (4) is fed back via a modulus-2-adder (7) to the input (8) of the shift register (4),

- direct comparison of every state vector a'($\tau$1), a'($\tau$2) displaced in time by the respective factor n/$p_1$ with the comparison state vector $a_{REF}$'(T($i$+1)1) associated with the respective prime factor $p_1$,
- determination of the modulus value $\tau$1l, $\tau$2l associated with the respective prime factor $p_1$ and interruption of

the iterative calculation of a further comparison state vector $a_{REF}{}'(\tau(i+2)1) = a_{REF}(\tau(i+2) \cdot \dfrac{n}{p_l})$

in the case of identity between the state vector a'($\tau$1), a'($\tau$2) displaced in time by the respective factor n/$p_1$ and a comparison state vector $a_{REF}$'($\tau$($i$+1)1) associated with the respective prime factor $p_1$,
- iterative calculation of the clock cycles $\tau$1, $\tau$2 associated with the two timing points $t_1$, $t_2$ respectively from all of the modulus values $\tau$1l, $\tau$2l associated with the respective prime factors $p_1$ and
- calculation of the number ($\Delta\tau$) of elapsed clock cycles from the difference of the clock cycles $\tau$1, $\tau$2 and display of the result ($\Delta\tau$) on the display device (3).

2. Method for determining the number of elapsed clock cycles of a binary random generator according to claim 1,
   **characterised in that**
   the clock cycles $\tau$1, $\tau$2 corresponding to the timing points $t_1$, $t_2$ are determined in each case from all of the modulus values $\tau$1l, $\tau$2l associated with the respective prime factors $p_1$ by iterative calculation.

3. Method for determining the number of elapsed clock cycles of a binary random generator according to claim 1 or 2,
   **characterised in that**
   the timing point $t_1$ is the initialisation timing point of the binary random generator (1); the associated state vector a(0) is a state vector containing the initialisation values of the shift-register stages ($5_1$, $5_2$, ..., $5_m$); the associated clock cycle $\tau$1 is zero; and the number ($\Delta\tau$) of the elapsed clock cycles corresponds to the clock cycle $\tau$2.

4. Device for determining the number ($\Delta\tau$) of elapsed clock cycles between two timing points $t_1$, $t_2$ of a binary random generator (1)
   with a binary random generator (1), which, in order to generate a binary random sequence s($\tau$i) with cycle length n, comprises a shift register (4) with at least one shift-register stage ($5_1$, $5_2$, ..., $5_m$) fed back to its input (8), and
   with a processor unit (10), which, via an input/output component group (9), reads in the binary states of all shift-register stages ($5_1$, $5_2$, ..., $5_m$) at the two timing points $t_1$, $t_2$, in each case combines [them] to a state vector a($\tau$1), a($\tau$2), displaces the state vectors a($\tau$1), a($\tau$2) in time respectively for every prime factor $p_1$ of the cycle length n to state vectors a'($\tau$1), a'($\tau$2) displaced in time by the respective factor n/$p_1$ according to the mathematical relationship

$$a'(\tau1) = a(\tau1 \cdot \frac{n}{p_l}) \quad \text{or} \quad a'(\tau2) = a(\tau2 \cdot \frac{n}{p_l}) \,, \quad \text{wherein} \quad n = \prod_{l=1}^{u} p_l \quad \text{applies, and wherein the processor}$$

unit (10) iteratively, successively calculates a comparison state vector $a_{REF}$'($\tau$($i$+1)1) at the clock cycle ($\tau$($i$+1)1) associated with the respective prime factor $p_1$ and displaced in time by the factor n/$p_1$ from a previously-buffered comparison state vector $a_{REF}$'($\tau$i1) at the clock cycle $\tau$i1 according to the following iteration formula:

$$a_{REF}{'}(\tau(i+1)\mathit{l}) = a_{REF}(\tau(i+1)\cdot\frac{n}{p_\mathit{l}}) = V^{n/p_\mathit{l}} \cdot a_{REF}{'}(\tau i\mathit{l}) = V^{n/p_\mathit{l}} \cdot a_{REF}(\tau i\cdot\frac{n}{p_\mathit{l}})$$

with

$$\text{a shift matrix } V = \begin{pmatrix} g_1 & g_2 & g_3 & \cdots & g_{m-3} & g_{m-2} & g_{m-1} & g_m \\ 1 & 0 & 0 & \cdots & 0 & 0 & 0 & 0 \\ \vdots & \vdots & \vdots & \cdots & \vdots & \vdots & \vdots & \vdots \\ 0 & 0 & 0 & \cdots & 0 & 1 & 0 & 0 \\ 0 & 0 & 0 & \cdots & 0 & 0 & 1 & 0 \end{pmatrix},$$

wherein it is determined via the associated coefficients $g_j$ of the vector g=[$g_1$ $g_2$ .. $g_m$], which output of a shift-register stage ($5_j$) of the shift register (4) is fed back via a modulus-2-adder (7) to the input (8) of the shift register (4),

wherein the processor unit (10) directly compares the state vectors a'($\tau$1), a'($\tau$2) displaced in time by the respective factor $n/p_1$ with the comparison state vector $a_{REF}{'}(\tau(i\mathit{l})$ associated with the respective prime factor $p_1$,

in the case of identity between the state vectors a'(t1), a'($\tau$2) displaced in time by the respective factor $n/p_1$ and the comparison state vector $a_{REF}{'}(\tau(i\mathit{l})$ associated with the respective prime factor $p_1$, determines the modulus values $\tau$1l, $\tau$2l associated with the respective prime factor $p_1$ and interrupts the iterative calculation of a further comparison state vector $a_{REF}{'}(\tau(i+2)\mathit{l}) = a_{REF}(\tau(i+2)\cdot\frac{n}{p_\mathit{l}})$ at the clock cycle $\tau(i+2)$1 and iteratively calculates the

clock cycles $\tau$1, $\tau$2 associated with the two timing points $t_1$, $t_2$ respectively from all of the modulus values $\tau$1l, $\tau$2l associated with the respective prime factors $p_1$ and the number ($\Delta\tau$) of elapsed clock cycles from the difference of the clock cycles $\tau$1, $\tau$2.

5. Device for determining the number ($\Delta\tau$) of elapsed clock cycles of a binary random generator according to claim 4, **characterised in that**
the device additionally contains a display device (3) for the presentation of the number ($\Delta\tau$) of elapsed clock cycles of a binary random generator (1).

## Revendications

1. Procédé pour déterminer le nombre ($\Delta\tau$) de cycles d'horloge écoulés entre deux instants $t_1$, $t_2$ d'un générateur pseudo-aléatoire binaire (1), qui comprend un registre à décalage (4) comportant au moins un étage de registre à décalage ($5_1$, $5_2$, ..., $5_m$) retourné à son entrée (8) en vue de la génération d'une suite pseudo-aléatoire binaire s ($\tau$i) avec une longueur de cycle n, comportant les étapes de procédé suivante :

• la lecture des états de tous les étages de registre à décalage ($5_1$, $5_2$,..., $5_m$) aux cycles d'horloge $\tau$1, $\tau$2 associés respectifs aux deux instants t1, t2 dans un vecteur d'état respectif a($\tau$1), a($\tau$2),
• le décalage temporel des vecteurs d'état a($\tau$1), a($\tau$2) pour chaque facteur premier $p_1$ de longueur de cycle n à un vecteur d'état respectif a'($\tau$1), a'($\tau$2) décalé temporellement à un facteur $n/p_1$ selon la relation mathématique

$$a'(\tau 1) = \left(\tau 1 \cdot \frac{n}{p_\mathit{l}}\right) \text{ ou } a'(\tau 2) = \left(\tau 2 \cdot \frac{n}{p_\mathit{l}}\right), \text{ où } n = \prod_{\mathit{L}=1}^{u} p_\mathit{L}$$

• le calcul itératif successif d'un vecteur d'état de comparaison $a_{ref}{'}(\tau(i+1)1)$ décalé temporellement du facteur $n/p_1$ et associé au facteur premier respectif $p_1$ au cycle d'horloge $\tau(i+1)1$ à partir d'un vecteur d'état de comparaison préalablement mémorisé $a_{ref}'(\tau i1)$ au cycle d'horloge $\tau i1$ selon la formule d'itération suivante

$$a_{ref}'(\tau(i+1)1) = a_{ref}(\tau(i+1) \cdot \frac{n}{p_1}) = V^{n/p_1} \cdot a_{ref}'(\tau i1) = V^{n/p_1} \cdot a_{ref}(\tau i \cdot \frac{n}{p_1})$$ avec une matrice à décalage

$$V = \begin{bmatrix} g_1 & g_2 & g_3 & \cdots & g_{m-3} & g_{m-2} & g_{m-1} & g_m \\ 1 & 0 & 0 & \ldots & 0 & 0 & 0 & 0 \\ \vdots & \vdots & \vdots & \ldots & \vdots & \vdots & \vdots & \vdots \\ 0 & 0 & 0 & \ldots & 0 & 1 & 0 & 0 \\ 0 & 0 & 0 & \ldots & 0 & 0 & 1 & 0 \end{bmatrix}$$

où, grâce aux coefficients associés $g_j$ du vecteur $g = [g_1\ g_2 \ldots g_m]$, il est défini, à quelle sortie de l'étage de registre à décalage ($5_j$) du registre à décalage (4) on est recouplé par l'intermédiaire d'un additionneur à module 2 (7) à l'entrée (8) du registre à décalage (4),
• la comparaison immédiate de chaque vecteur d'état a'($\tau$1), a'($\tau$2) décalé temporellement du facteur respectif $n/p_1$ au vecteur d'état de comparaison $a_{ref}'(\tau(i+1)1)$ associé au facteur premier respectif $p_1$,
• la détermination de la valeur du module $\tau$1l, $\tau$2l associée au facteur premier respectif $p_1$ et l'interruption du calcul itératif d'un autre vecteur d'état de comparaison $a_{ref}'(\tau(i+2)1) = a_{ref}(\tau(i+2) \cdot \frac{n}{p_1})$ au cycle

d'horloge $\tau(i+2)1$ en cas d'identité entre le vecteur d'état a'($\tau$1), a'($\tau$2) décalé dans le temps du facteur respectif $n/p_1$ et un vecteur d'état de comparaison $a_{ref}'(\tau(i+1)1)$ associé au facteur premier respectif $p_1$,
• le calcul itératif des cycles d'horloge $\tau$1, $\tau$2 associés aux deux instants $t_1$, $t_2$ à partir de toutes valeurs respectives de module $\tau$1l, $\tau$2l associées aux facteurs premiers respectifs $p_1$ et
• le calcul du nombre ($\Delta\tau$) de cycles d'horloge écoulés à partir de la différence des cycles d'horloge $\tau$1, $\tau$2 et l'affichage du résultat ($\Delta\tau$) sur un dispositif d'affichage (3).

2. Procédé pour déterminer le nombre de cycles d'horloge écoulés d'un générateur pseudo-aléatoire binaire selon la revendication 1, **caractérisé en ce que** les cycles d'horloge $\tau$1, $\tau$2 correspondants aux instants $t_1$, $t_2$ sont déterminés par calcul itératif à partir de toutes les valeurs de module $\tau$1l, $\tau$2l associées aux facteurs premiers respectifs $p_1$.

3. Procédé pour déterminer le nombre de cycles d'horloge écoulés d'un générateur pseudo-aléatoire binaire selon la revendication 1 ou 2, **caractérisé en ce que** l'instant $t_1$ est l'instant d'initialisation du générateur pseudo-aléatoire binaire (1), le vecteur d'état associé a(0) est un vecteur d'état contenant la valeur d'initialisation des étages de registre à décalage ($5_1$, $5_2$,..., $5_m$), le cycle d'horloge associé $\tau$1 est zéro et le nombre ($\Delta\tau$) des cycles d'horloge écoulés correspond au cycle d'horloge $\tau$2.

4. Dispositif pour déterminer le nombre ($\Delta\tau$) de cycles d'horloge écoulés entre deux instants $t_1$, $t_2$ d'un générateur pseudo-aléatoire binaire (1)
comportant un générateur pseudo-aléatoire (1), qui comprend un registre à décalage (4) avec au moins un étage de registre à décalage ($5_1$, $5_2$, ..., $5_m$) retourné à son entrée (8) en vue de la génération d'une suite pseudo-aléatoire binaire s($\tau$i) avec une longueur de cycle n, et
comportant une unité de processeur (10), qui lit les états binaires de tous les étages de registre à décalage ($5_1$, $5_2$,... $5_m$) aux deux instants $t_1$, $t_2$ par l'intermédiaire d'un composant d'entrée/sortie (9), les réunit en un vecteur d'état a($\tau$1), a($\tau$2), décale temporellement les vecteurs d'état a($\tau$1), a($\tau$2) respectivement pour chaque facteur premier $p_1$ de longueur de cycle n aux vecteurs d'état décalés temporellement a'($\tau$1), a'($\tau$2) du facteur respectif $n/p_1$ selon

la relation mathématique $a'(\tau 1) = \left( \tau 1 \cdot \dfrac{n}{p_1} \right)$

$a'(\tau 2) = \left( \tau 2 \cdot \dfrac{n}{p_1} \right)$, où $n = \prod\limits_{\iota=1}^{u} p_\iota$ et où l'unité de processeur (10) calcule de façon itérative le vecteur d'état de comparaison successif $a_{ref}'(\tau(i+1)1)$ décalé temporellement du facteur $n/p_1$ et associé au facteur premier respectif $p_1$ au cycle d'horloge $\tau(i+1)1$ à partir d'un vecteur d'état de comparaison préalablement mémorisé $a_{ref}'(\tau i1)$ au cycle d'horloge $\tau i1$ selon la formule d'itération suivante

$$a_{ref}'(\tau(i+1)1) = a_{ref}(\tau(i+1) \cdot \frac{n}{p_1}) = V^{n/p_1} \cdot a_{ref}'(\tau i1) = V^{n/p_1} \cdot a_{ref}(\tau i \cdot \frac{n}{p_1})$$ avec une matrice à décalage

$$V = \begin{bmatrix} g_1 & g_2 & g_3 & \cdots & g_{m-3} & g_{m-2} & g_{m-1} & g_m \\ 1 & 0 & 0 & \ldots & 0 & 0 & 0 & 0 \\ \vdots & \vdots & \vdots & \ldots & \vdots & \vdots & \vdots & \vdots \\ 0 & 0 & 0 & \ldots & 0 & 1 & 0 & 0 \\ 0 & 0 & 0 & \ldots & 0 & 0 & 1 & 0 \end{bmatrix}$$

où, grâce aux coefficients associés $g_j$ du vecteur $g = [g_1\, g_2 \ldots g_m]$, il est défini, à quelle entrée d'un étage de registre à décalage ($5_j$) du registre à décalage (4), associées au facteur premier respectif $p_1$ en cas d'identité on revient par l'intermédiaire d'un additionneur-à module 2 (7) à l'entrée (8) du registre à décalage (4),
où l'unité de processeur (10) compare immédiatement les vecteurs d'état $a'(\tau 1)$, $a'(\tau 2)$ décalés temporellement du facteur respectif $n/p_1$ au vecteur d'état de comparaison $a_{ref}'(\tau il)$ associé au facteur premier respectif $p_1$, détermine les valeurs de module $\tau 1l$, $\tau 2l$ entre les vecteurs d'état $a'(\tau 1)$, $a'(\tau 2)$ temporellement décalés du facteur respectif $n/p_1$ et le vecteur d'état de comparaison $a_{ref}'(\tau il)$ associé au facteur premier respectif $p_1$ et interrompt le calcul itératif d'un autre vecteur d'état de comparaison $a_{ref}'(\tau(i+2)1) = a_{ref}(\tau(i+2) \cdot \dfrac{n}{p_1})$ au cycle d'horloge $\tau(i+2)1$ et calcule les cycles d'horloge $\tau 1$, $\tau 2$ associés aux deux instants $t_1$, $t_2$ à partir de toutes les valeurs respectives de module $\tau 1l$, $\tau 2l$ associées aux facteurs premiers respectifs $p_1$ et le nombre ($\Delta\tau$) de cycles d'horloge écoulés à partir de la différence des cycles d'horloge $\tau 1$, $\tau 2$.

5. Dispositif pour déterminer le nombre ($\Delta\tau$) de cycles d'horloge écoulés d'un générateur pseudo-aléatoire binaire selon la revendication 4, **caractérisé en ce que** le dispositif comporte en outre un dispositif d'affichage (3) pour afficher le nombre ($\Delta\tau$) de cycles d'horloge écoulés d'un générateur pseudo-aléatoire binaire (1).

Fig. 1

EP 1 594 229 B1

```
                          ╭─────────╮
                          │  Start  │
                          ╰─────────╯
                               │
                               ▼
        ┌────────────────────────────────────────────┐
        │  Einlesen des Zustandsvektors                │
S10     │  a(τx) des Schieberegisters zum              │
        │  Meßtaktzyklus τx                            │
        └────────────────────────────────────────────┘
                               │
                               ▼
        ┌────────────────────────────────────────────┐
        │  Berechnung der Koeffizienten                │
        │  der Substitutionsmatrix K aus dem           │
S20     │  Startzustandsvektor a(0) und dem            │
        │  eingelesenen Zustandsvektor a(τx)           │
        └────────────────────────────────────────────┘
                               │
                               ▼
        ┌────────────────────────────────────────────┐
        │  Für jeden teilerfremden Faktor $p_1$        │
        │  der Zykluslänge n Berechnung der            │
S30     │  Matrix $K^{n/p_1}$ und daraus den zeitlich  │
        │  verschobenen Zustandsverktor a(τx)          │
        └────────────────────────────────────────────┘
                               │
                               ▼
        ┌────────────────────────────────────────────┐
        │  Für jeden teilerfremden Faktor $p_1$        │
        │  der Zykluslänge n Berechnung aller          │
        │  Vergleichszustandsvektoren $a_{REF}'(τil)$  │
S40     │  und Suche des zum zeitlich verschobenen     │
        │  eingelesenenZustandsvektor a'(τx) passen-   │
        │  den Vergleichszustandvektor $a_{REF}'(τxl)$ │
        └────────────────────────────────────────────┘
                               │
                               ▼
        ┌────────────────────────────────────────────┐
        │  Zuweisung des zum gesuchten Vergleichs-     │
        │  zustandsvektor $a_{REF}'(τxl)$ gehörigen Takt-│
        │  zyklus τxl als Modulus der Division des     │
        │  gesuchten Taktzyklus τx durch den teiler-   │
S50     │  fremden Faktor $p_1$                         │
        └────────────────────────────────────────────┘
                               │
                               ▼
        ┌────────────────────────────────────────────┐
        │  Iterative Berechnung des gesuchten Takt-    │
S60     │  zyklus τx aus allen ermittelten Modulus-    │
        │  werten τxl                                  │
        └────────────────────────────────────────────┘
                               │
                               ▼
                          ╭─────────╮
                          │  Ende   │
                          ╰─────────╯
```

Fig. 2

S30

S40B1 — Online-Berechnung der Verschiebe-matrix $V^{n/p_1}$ für jeden teilerfremden Faktor $p_1$

S40B2 — sukzessive iterative Online-Berechnung des Vergleichszustandsvektors $\sigma_{REF}'(\tau_{i1})$ zum Taktzyklus $\tau_{i1}$ für jeden teilerfremden Faktor $p_1$

S40B3 — Vergleich des eingelesenen, zeitlich verschobenen Zustandsvektors $\sigma'(\tau_x)$ mit dem berechneten Vergleichszustansvektor $\sigma_{REF}'(\tau_{i1})$

S40B4 — Falls keine Übereinstimmung vorliegt iterative Online-Berechnung des Vergleichszustandsvektors $\sigma_{REF}'(\tau(i+1)1)$ zum nächsten Taktzyklus $\tau(i+1)1$ für jeden teilerfremden Faktor $p_1$

S50

Fig. 2A

Start

S30

Offline—Berechnung von insgesamt $\rho$ verschiedenen Verschiebematrizen $V^{in/pl}$ für alle teilerfremden Faktoren $p_l$

S00C

Offline—Berechnung einer Teilmenge $a_{REF}''(\tau il)$ von insgesamt o Vergleichszustandsvektoren $a_{REF}'(\tau il)$

S05C

S40C1 — Vergleich des eingelesenen zeit—verschobenen Zustandsvektors $a'(\tau x)$ mit der Teilmenge $a_{REF}''(\tau il)$ von o Vergleichszustandsvektoren

S40C2 — Falls keine Übereinstimmung vor—liegt, Berechnung des um insgesamt $o \cdot n/p_l$ Taktzyklen zeitlich verscho—benen Zustandsvektors $a''(\tau x)$

S40C3 — Vergleich des um $o \cdot n/p_l$ Taktzyklen zeitlich verschobenen Zustandsvek—tors $a''(\tau x)$ mit der Teilmenge $a_{REF}''$ von o Vergleichszustandsvektoren

S40C4 — Falls keine Übereinstimmung vor—liegt erneute zeitliche Verschiebung des eingelesenen Zustandsvektors um insgesamt $o \cdot n/p_l$ Taktzyklen

S50C — Zuweisung des zum gesuchten Zu—standsvektor $a''(\tau x l')$ gehörigen Takt—zyklus $\tau x l'$ und Berechnung des tat—sächlichen Taktzyklus $\tau x l$ entsprechend der Anzahl an Schiebeoperationen

Fig. 2C

S60

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4139630


**In der Beschreibung aufgeführte Nicht-Patentliteratur**

- **Clark, D.W. et al.** Maximal and Near-Maximal Shift Register Sequences Efficient Event Counters and Easy Discrete Logarithms. *IEEE Transactions on Computers,* 01. Mai 1994, vol. 43 (5), 560-567

- **Mukund, S.K. et al.** On reducing test length in LFSR based testing. *Fourth CSI/IEEE International Symposium on VLSI design,* 1991, 231-236